(19) **Europäisches Patentamt / European Patent Office / Office européen des brevets**

(11) **EP 4 474 432 A1**

(12) **EUROPEAN PATENT APPLICATION**
published in accordance with Art. 153(4) EPC

(43) Date of publication:
**11.12.2024  Bulletin 2024/50**

(21) Application number: **23749892.8**

(22) Date of filing: **06.02.2023**

(51) International Patent Classification (IPC):
*C08L 101/14* (2006.01)     *A61F 13/53* (2006.01)
*B01J 20/26* (2006.01)       *B01J 20/30* (2006.01)
*B29B 17/02* (2006.01)       *C08J 3/20* (2006.01)
*C08J 11/06* (2006.01)

(52) Cooperative Patent Classification (CPC):
**A61F 13/53; B01J 20/26; B01J 20/30; B29B 17/02;
C08J 3/20; C08J 11/06; C08L 101/14; Y02W 30/62**

(86) International application number:
**PCT/JP2023/003778**

(87) International publication number:
**WO 2023/149576 (10.08.2023 Gazette 2023/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.02.2022  JP 2022016734
20.07.2022  JP 2022115231**

(71) Applicant: **Nippon Shokubai Co., Ltd.
Osaka-shi, Osaka 541-0043 (JP)**

(72) Inventors:
• **TAJIMA, Shun-ichi
Himeji-shi, Hyogo 671-1282 (JP)**

• **TORII, Kazushi
Himeji-shi, Hyogo 671-1282 (JP)**
• **KIMURA, Kazuki
Himeji-shi, Hyogo 671-1282 (JP)**
• **TAMAKI, Mariko
Himeji-shi, Hyogo 671-1282 (JP)**
• **MATSUI, Daisuke
Himeji-shi, Hyogo 671-1282 (JP)**
• **KOBAYASHI, Nobuhiro
Himeji-shi, Hyogo 671-1282 (JP)**
• **ISHIZAKI, Kunihiko
Himeji-shi, Hyogo 671-1282 (JP)**

(74) Representative: **Schön, Christoph
Dr. Schön, Neymeyr & Partner mbB
Bavariaring 26
80336 München (DE)**

(54) **METHOD FOR PRODUCING WATER-ABSORBING RESIN CONTAINING RECYCLED WATER-ABSORBING RESIN, AND USE THEREOF**

(57)  Provided is a method including the steps of: mixing a recycled water-absorbing resin in a production process of a water-absorbing resin in which a monomer is used as a raw material; and/or mixing the recycled water-absorbing resin with an unused produced water-absorbing resin, the recycled water-absorbing resin having a water-soluble content of 30 weight% or less.

## Description

Technical Field

The present invention relates to, for example, a method for producing a water-absorbing resin that contains a recycled water-absorbing resin obtained by processing a water-absorbing resin contained in a used absorbent article, and a water-absorbing resin that contains a recycled water-absorbing resin obtained by this production method. This production method can allow the water-absorbing resin that contains a recycled water-absorbing resin to have, by recovery of performance, a quality equivalent to that of an unused produced water-absorbing resin.

Background Art

In recent years, in water absorbent articles such as a disposable diaper, a sanitary napkin, an incontinence pad, a water-absorbing sheet, and a cat litter, from the viewpoint of absorption of body fluid, a water-absorbing resin constituting the absorbent articles is widely used as a water-absorbing agent. Known examples of such a water-absorbing resin include a hydrolyzate of a starch-acrylonitrile graft copolymer, a neutralized product of a starch-acrylic acid graft polymer, a saponified product of a vinyl acetate-acrylic ester copolymer, and a crosslinked product of a partially neutralized acrylic acid polymer. Among others, from the viewpoint of water absorption performance, a polyacrylic acid (salt)-based water absorbent resin formed by using an acrylic acid and/or a salt thereof as a monomer(s) is industrially most often produced.

Water absorbent articles are generally disposable. However, there is a growing interest in recycling of hygienic materials because of growing environmental awareness (Patent Literatures 1 to 3). Also for a water-absorbing resin used in water absorbent articles, a technique for recycling the water-absorbing resin as a water-absorbing resin or another useful substance has been developed (Patent Literatures 4 to 13).

The water absorbent articles are routinely consumed as hygienic materials or the like today in large amounts at homes, hospitals, and facilities, for absorption of, for example, urine, blood, menstrual blood, waste fluid, and the like. The water absorbent articles are then discarded after use. These water absorbent articles (especially hygienic materials) are composed of a water-absorbing member for absorbing water, urine, blood, menstrual blood, waste fluid, and the like (generally referred to as water absorption) in addition to nonwoven fabric, adhesive, paper, and the like. As the water-absorbing member, fiber materials such as pulp, and others such as porous materials (e.g., sponge and HIPE), and further, water-absorbing resins are used.

These disposable water absorbent articles, particularly constituent members of hygienic materials, are produced from natural products typified by wood or from fossil raw materials typified by petroleum and coal, but the hygienic materials are generally disposed within a short period of time. The hygienic materials which have been used are discarded after use, and are incinerated or disposed by landfill. However, from the viewpoint of recent consideration of global environment, reduction of $CO_2$, and further, saving of resources, a method for regenerating a constituent member of a disposable hygienic material has been proposed (Non-patent Literatures 1 to 3, and Patent Literatures 5, 6, 7, 9, 14 to 18).

A method of regenerating a constituent member of a disposable water absorbent article (hygienic material) is generally a method in which recovered disposable hygienic materials such as used paper diapers are washed, decomposed, and separated into individual constituent raw materials (such as pulp, adhesive, nonwoven fabric, water-absorbing resin and/or paper) and regenerated. Among such methods for regenerating disposable hygienic materials, it is relatively easy to regenerate a member of low water absorption, such as pulp, an adhesive, or nonwoven fabric. However, water-absorbing resins absorb water and urine in a large amount, and therefore are difficult to separate and regenerate. Therefore, even with use of a complex separation/regeneration step, regeneration cost of the water-absorbing resins has been high due to a residual absorbed water component originating from urine, menstrual blood, etc. and due to thermal degradation at the time of re-drying. Further, regeneration has been difficult because of deterioration in water absorption performance.

Furthermore, for example, the following method is known as a method for separating each member from a water absorbent article (hygienic material). That is, known is a method according to which the hygienic material is decomposed and dispersed in water and separated, a hydrogel of the water-absorbing resin is then treated so as to shrink/solidify with use of an aqueous solution of, for example, an acid, an organic solvent, or a polyvalent metal salt such as a water-soluble calcium compound, and the hydrogel is separated.

In a case where a polyvalent metal salt is used for a shrinkage treatment of the water-absorbing resin, a fluid retention capacity becomes very low due to crosslinking with a polyvalent metal salt. The water absorption performance cannot be easily recovered by a subsequent regeneration treatment. On this account, a method for reusing a used water-absorbing resin has been difficult. Moreover, in a case where the water-absorbing resin is subjected to an acid treatment as in Patent Literatures 15 and 5, a large amount of a costly organic acid is used. Accordingly, separation of the organic acid has been difficult. Furthermore, in a case where the water-absorbing resin is subjected to a solubilizing treatment as in Patent Literatures 17 and 18, there have been cases where a waste water treatment of the aqueous solution containing the water-absorbing resin and reuse of the water-absorbing resin as a water-absorbing resin is difficult due to an effect of a decomposition agent used.

In addition, many reagents and solvents (water, organic solvents, and the like) are necessary for the regeneration of the water-absorbing resin. Therefore, there have been cases where cost of the reagents and the solvents, and contamination of a regenerated water-absorbing resin with the reagents and the solvents become problems.

Even in a case where a decomposition product or a regenerated product of the used water-absorbing resin is used in a production process of a water-absorbing resin as in Patent Literatures 17, 18, and 5 in addition to any of techniques for regenerating a water-absorbing resin which are disclosed in Patent Literatures 14 to 16, 6, and 7, it still cannot be said that such regeneration is sufficient. Furthermore, even in cases where the above regeneration methods are used, the following problems have been observed in some cases: recovery of water absorption performance of the water-absorbing resin is inadequate; powder properties (flowability and bulk density), other than the water absorption performance, of the water-absorbing resin which has been regenerated deteriorate; and coloration and odor worsen.

Citation List

[Patent Literatures]

[Patent Literature 1]
Japanese Patent Application Publication Tokukai No. 2000-84533
[Patent Literature 2]
Japanese Patent Application Publication Tokukai No. 2019-178461
[Patent Literature 3]
Japanese Patent Application Publication Tokukai No. 2006-320900
[Patent Literature 4]
Japanese Patent Application Publication Tokukai No. 2003-135519
[Patent Literature 5]
International Publication No. WO 2021/044690
[Patent Literature 6]
International Publication No. WO 2021/162071
[Patent Literature 7]
International Publication No. WO 2021/162082
[Patent Literature 8]
European Patent Application Publication No. EP3783055A1
[Patent Literature 9]
US Patent Application Publication No. US2021/0053028A1
[Patent Literature 10]
US Patent Application Publication No. US2021/0054161A1
[Patent Literature 11]
US Patent Application Publication No. US2021/0054163A1
[Patent Literature 12]
US Patent Application Publication No. US2021/0054164A1
[Patent Literature 13]
Japanese Patent Application Publication Tokukai No. 2021-075819
[Patent Literature 14]
Japanese Translation of PCT International Application, Tokuhyohei, No. 06-502454
[Patent Literature 15]
International Publication No. WO 2013/141357
[Patent Literature 16]
Japanese Patent Application Publication Tokukai No. 2003-326161
[Patent Literature 17]
International Publication No. WO 2020/213298
[Patent Literature 18]
International Publication No. WO2022/080342

[Non-patent Literatures]

[Non-patent Literature 1]
Tokusyu 3: Chikyu Kankyo ni Hairyoshita Monozukuri (Special topic 3: Manufacturing in Consideration of Global Environment), CSR Activity Report, 2016, 4.0:, Unicharm Corporation, May 9, 2016 (date of issue/accession), 4.0: 3, 21-24
[Non-patent Literature 2]
Japanese domestic magazine, Shigeo Imai et al., Shiyozumi Kamiomutsu no Risaikuru ni Yoru Parupu Sairiyou no Kankyou Eikyou Hyouka and Omutsu Shigenka no Kankyo Hyouka (Environment Impact Assessment of Pulp Reuse by Recycling Used Paper Diapers and Environment Assessment of Recycling Paper Diapers), Kankyou Jyoka Gijyutsu (Environment Cleanup Technology), 4.0:, July 1, 2016 (date of issue/accession), 4.0: 1, Vol. 15, No. 4, pp. 85-89
[Non-patent Literature 3]
Japanese domestic magazine, Sachiko Adachi et al., Green Converting, Kami-omutsu to Kami-omotu no Jyunkan Risaiukuru he and Onshitsu Kouka Gasu 3 Warigen no Shinsaishigennka Gijyutsu (Movement to Paper Diaper to Paper Diaper Circulation Recycling and New Recycling Technology for Reducing Greenhouse Effect Gas by 30%), CONVERTECH, 4.0: February 15, 2016 (date of issue/accession), 4.0: 1, Vol. 44, No. 2, pp. 50-52

Summary of Invention

Technical Problem

Presently, various methods for recycling water-absorbing resins from used absorbent articles are being developed. However, with such recycling techniques, water-absorbing resins that have been recycled (recycled water-absorbing resins) have lower water absorption performance than unused produced water-absorbing resins, under a condition in which a case where the water-absorbing resins are actually used in hygienic materials such as paper diapers is assumed. Accordingly, when a recycled water-absorbing resin is used in a hygienic material, absorption properties of an absorbent body may be impaired. On this account, further improvement has been required.

An aspect of the present invention provides a method for regenerating a constituent member of a disposable hygienic material that contains a water-absorbing resin, the method being for regenerating a water-absorbing resin whose regeneration has been most difficult in terms of cost and performance. That is, an aspect of the present invention provides a method for regenerating a constituent member of a disposable water absorbent article (hygienic material) that contains a water-absorbing resin, and in particular, a method for regenerating a used water-absorbing resin. An aspect of the present invention further provides a method for producing a water-absorbing resin, the method including, for example, the step of mixing a recycled water-absorbing resin obtained by the above regeneration method, in a production process of a water-absorbing resin in which a monomer is used as a raw material.

Solution to Problem

A method for producing a water-absorbing resin, the method including the steps of: mixing a recycled water-absorbing resin in a production process of a water-absorbing resin in which a monomer is used as a raw material; and/or mixing the recycled water-absorbing resin with an unused produced water-absorbing resin, the recycled water-absorbing resin having a water-soluble content ("Ext") of 30 weight% or less.

Advantageous Effects of Invention

According to an aspect of the present invention, even a water-absorbing resin mixed with a recycled water-absorbing resin exhibits favorable performance equivalent to that of an unused produced water-absorbing resin, and also exhibits favorable performance even in a water-absorbing body used in a water absorbent article such as a paper diaper.

Further, an aspect of the present invention can provide a method for producing a water-absorbing resin, the method reusing a water-absorbing resin that has absorbed a lot of water, by a simple method which achieves high productivity at low cost and less deterioration of physical properties.

Description of Embodiments

The following descriptions will discuss, in detail, a method for producing a water-absorbing resin in accordance with an embodiment of the present invention, but the scope of the present invention will not be limited by the descriptions. The following will describe a first embodiment and a second embodiment separately as embodiments of the present invention.

(1-1) Technical idea of embodiment

As a method for recycling a used water absorbent article, various methods have been proposed, and among such methods, there are techniques related to recycling (regeneration) of a water-absorbing resin. Ordinarily, performance of water-absorbing resins obtained by such recycling techniques deteriorates in many cases, and degrees of deterioration of the performance vary depending on methods and condlitions at the time of recycling.

These recycled water-absorbing resins can be used as is, for limited applications in which deterioration in quality is acceptable. If quality and the performance of the recycled water-absorbing resin is recovered to a level equal or equivalent to that of quality and performance of an unused produced water-absorbing resin, the recycled water-absorbing resin can be widely reused. However, it is difficult to perfectly recover the quality and the performance to the same level as those of the unused produced water-absorbing resin. Further, even when the recycled water-absorbing resin is simply mixed with the unused produced water-absorbing resin, the performance of the recycled water-absorbing resin has often deteriorated.

In order to address such a problem, the inventors of the present invention conducted diligent studies. As a result, the inventors found the following: it is sufficient to obtain a recycled water-absorbing resin that satisfies a specific performance level even in a case where the performance of the recycled water-absorbing resin is not recovered to the level of the unused produced water-absorbing resin. In other words, in the first embodiment, the recycled water-absorbing resin is mixed with the unused produced water-absorbing resin; or in a production process of a (conventional) water-absorbing resin in which a monomer is used as a raw material, the recycled water-absorbing resin is mixed in a specific production step(s). In a case where the recycled water-absorbing resin is mixed in the production process of the water-absorbing resin, the recycled water-absorbing resin is mixed in a step subsequent to a polymerization step in the production process. In other words, the above "specific production step" refers to a step "subsequent to the polymerization step". As a result, the inventors have found that the quality and the performance of the recycled water-absorbing resin can be recovered to a level equal or equivalent to that of the quality and the performance of the unused produced water-absorbing resin. The inventors thus have completed an embodiment of the present invention. Note that the recycled water-absorbing resin used in the first embodiment is, for example, a recycled water-absorbing resin which will be described later in "[1-2-2] Recycled water-absorbing resin".

Next, the second embodiment is an embodiment in which a low-cost material that has lost water absorption performance is used as the recycled water-absorbing resin through the step of shrinking a hydrogel of a used water-absorbing resin. Further, the second embodiment is an embodiment obtained by finding that the water absorption performance derived from a used water-absorbing resin is unexpectedly and substantially recovered by adding the recycled water-absorbing resin in a production process of a water-absorbing resin.

The inventors of the present invention have also found that deterioration of the performance of the water-absorbing resin results not only from thermal degradation in the step of simply recycling a used water-absorbing resin and from a residual absorbed water component (e.g., urine), but also from a constituent other than the water-absorbing resin of a hygienic material. Examples of the constituent include pulp, adhesive, nonwoven fabric, and a metal component.

Furthermore, the inventors of the present invention have found that among many regeneration methods, in a regeneration method in which a used water-absorbing resin is added in a production process of a water-absorbing resin, deterioration in performance that results from the constituent other than the water-absorbing resin of the hygienic material is noticeably exhibited. Further, the inventors of the present invention have found that, by removing the above constituent, water absorption performance and powder performance are sufficiently recovered. In addition, the inventors of the present invention have found that the constituent can be easily removed at a specific stage. As a result, the inventors have completed an embodiment of the present invention.

In other words, in a method for regenerating a constituent member of a disposable hygienic material, the inventors of the present invention removed the constituent member before and after drying a hydrogel of a used water-absorbing resin. Then, a resultant re-dried material of the used water-absorbing resin thus obtained was added as a recycled water-absorbing resin in a production process of a water-absorbing resin which has a different performance from the re-dried material. The inventors of the present invention have found that this makes it possible to regenerate a used water-absorbing resin excellent in cost and performance, and thus have completed the method for regenerating a used water-absorbing resin.

Note that a water-absorbing resin prior to use is ordinarily dry. Therefore, the used water-absorbing resin which has been dried in the above regeneration is referred to as a re-dried material.

(1-2) Term definitions

[1-2-1] Water-absorbing resin

In an embodiment of the present invention, the term "water-absorbing resin" refers to a water-swellable, waterinsoluble cross-linked polymer (polymer gel). Although not particularly limited, the term "water-absorbing resin" refers to a conventional water-absorbing resin which has a fluid retention capacity of 10 times to 1000 times. Another name for the "water-absorbing resin" is "water-absorbing polymer", "SAP", or "water-absorbing gelling agent".

More specifically, it is preferable that the water-absorbing resin (hereinafter, also referred to as "initial water-absorbing resin") prior to absorption of liquid to be absorbed satisfy a physical property that CRC, which is defined as "water-swelling property" in ERT 441.2-02, is 5 g/g or more. Note that the above CRC is the same in meaning as "absorption capacity without load".

In an embodiment of the present invention, specific examples of the water-absorbing resin include a polyacrylic acid (salt)-based resin, a polysulfonic acid (salt)-based resin, a maleic anhydride (salt)-based resin, a polyacrylamide-based resin, a polyvinyl alcohol-based resin, a polyethylene oxidebased resin, a polyaspartic acid (salt)-based resin, a polyglutamic acid (salt)-based resin, a polyalginic acid (salt)-based resin, a starch-based resin, a cellulose-based resin, a (meth)acrylic acid salt crosslinked polymer, a saponified crosslinked (meth)acrylic acid ester-vinyl acetate copolymer, and a starch-acrylic acid salt graft polymer and a crosslinked substance thereof.

[1-2-2] Recycled water-absorbing resin

In an embodiment of the present invention, the "recycled water-absorbing resin" refers a resin that is obtained by returning, to a usable condition for water-absorbing purposes, a water-absorbing resin which has been taken out from a used absorbent article and which has ordinarily been discarded, thermally recycled as fuel, composted, or the like. In other words, the "recycled water-absorbing resin" refers to a water-absorbing resin that has absorption performance recovered and that can be used for water-absorbing purposes.

Note that although the recycled water-absorbing resin has absorption performance of a level that has not been recovered to a level of that of an unused produced water-absorbing resin, the recycled water-absorbing resin has a certain level of absorption performance. Accordingly, the recycled water-absorbing resin used in the first embodiment preferably has a fluid retention capacity (CRC) of 3 g/g or more. The fluid retention capacity is more preferably 5 g/g or more, 10 g/g or more, 15 g/g or more, 20 g/g or more, 25 g/g or more, 30 g/g or more, or 40 g/g or more.

In a case where the recycled water-absorbing resin is obtained by a method including steps (1) to (3) described later, the recycled water-absorbing resin is a re-dried material (b) of a used water-absorbing resin, which has been obtained, from a re-dried material (a) described later, by re-separating the constituent material other than the used water-absorbing resin in the used hygienic material. The used water absorbent article may partially contain an unused water absorbent article. Note that this re-dried material (b) is used in the second embodiment.

As a method for making it possible to reuse a water-absorbing resin which has been taken out from the used water absorbent article, there is a well-known recycling method such as a method disclosed in Japanese Patent Application Publication Tokukai No. 2013-198862 or Japanese Patent Application Publication Tokukai No. 2019-135046.

The term "recycled water-absorbing resin" refers to a water-absorbing resin which has undergone, according to the above recycling method, washing, and/or dehydration, and/or regeneration, and/or crushing, and/or separation and/or sterilization/disinfection. The water-absorbing resin which is obtained by the method including the steps (1) to (3) described later is also classified as the recycled water-absorbing resin. Note that in an embodiment of the present application, the "recycled water-absorbing resin" may also be called "recycled water-absorbing resin".

[1-2-3] Water-absorbing agent

In an embodiment of the present invention, the term "water-absorbing agent" refers to a water-based liquid gelling agent which contains a water-absorbing resin as a main component. Note that the "water-based liquid" is not limited to water. Examples of the water-based liquid include urine, blood, feces, waste fluid, moisture and/or vapor, ice, a mixture of water and an organic solvent and/or an inorganic solvent, rain water, and ground water. The water-based liquid is thus not limited to any particular one, provided that the water-based liquid contains water. Among others, the water-based liquid can be more preferably urine, particularly human urine. The content of the water-absorbing resin (polyacrylic acid (salt)-based water absorbent resin) in accordance with an embodiment of the present invention is preferably 70 weight% to 99.9 weight%, more preferably 80 weight% to 99.7 weight%, even more preferably 90 weight% to 99.5 weight%, relative to the total weight of the water-absorbing agent. Another component(s) other than the water-absorbing resin is preferably water from the viewpoint of water absorption speed and impact resistance of powder (particles), and includes an additive(s) disclosed in Japanese Patent No. 5350361 according to need.

[1-2-4] Water absorbent article

In an embodiment of the present invention, the term "water absorbent article (also called "absorbent article")" refers to an article which is used for water absorption applications. More specifically, the term "water absorbent article" refers to a water absorbent article which includes: an absorbent body that contains a water-absorbing resin and a fibrous material; a surface sheet that has liquid permeability; and a back sheet that has liquid impermeability. The aforementioned absorbent body is more suitably produced by blending the water-absorbing resin and the fibrous material with each other or by sandwiching the water-absorbing resin between fibrous materials and forming the water-absorbing resin and the fibrous materials into a film shape, a cylindrical shape, a sheet shape, or the like. Examples of the fibrous materials include hydrophilic fibers such as crushed wood pulp, cotton linter, crosslinked cellulosic fibers, rayon, cotton, wool, acetate, and vinylon.

In a method for producing a recycled water-absorbing resin in accordance with an aspect of an embodiment of the present invention, the "used water absorbent article" includes, in particular, a used hygienic material which has absorbed body fluid (absorbed liquid) such as urine and/or blood. Examples of the hygienic material include hygienic materials (sanitary materials) such as paper diapers, sanitary napkins, incontinence products for adults (incontinence pads), and sheets for pets. The water absorbent article can contain a water-absorbing agent in accordance with an embodiment of the present invention.

[1-2-5] Unused produced water-absorbing resin

The term "unused produced water-absorbing resin" refers to a water-absorbing resin which has already been produced but which has not yet been used. The "unused produced water-absorbing resin" includes a water-absorbing resin product (water-absorbing agent) prior to shipment.

[1-2-6] Water-absorbing resin obtained by production method in which monomer is used as raw material

The term "water-absorbing resin obtained by a production method in which a monomer is used as a raw material" refers to a water-absorbing resin that is produced such that a monomer constituting the water-absorbing resin is used as a main component of raw materials. This production method is a conventional (ordinary) method for producing a water-absorbing resin. Such a method for producing a water-absorbing resin will be described later.

[1-2-7] Hygienic material

A water absorbent article using a water-absorbing resin. Typically, a paper diaper, a napkin, and an incontinence pad.

[1-2-8] Used water-absorbing resin and used hygienic material

A hygienic material that has been used for water-absorbing purposes, and a water-absorbing resin thereof.

[1-2-9] Regeneration method

To make a water-absorbing resin contained in a hygienic material reusable by separating a constituent member of the hygienic material.

[1-2-10] Improvement of water absorption performance

To improve water absorption performance from that of a used water-absorbing resin or a dried material thereof.

[1-2-11] Fluid retention capacity CRC of water-absorbing resin

A fluid retention capacity (g/g) (EDANA: WSP 241.3 (10)) of a water-absorbing resin which has been swelled for 30 minutes in physiological saline (0.9 weight%) and further subjected to centrifugal dehydration.

[1-2-12] Fluid retention capacity FSC of water-absorbing resin

A fluid retention capacity (g/g) (EDANA: WSP 240.2 (10)) after a water-absorbing resin has been swelled for 30 minutes in physiological saline (0.9 weight%) and further hung and dehydrated.

[1-2-13] Soluble content Extr of water-absorbing resin

An amount (weight%) (EDANA: WSP270.3 (10) of a water-soluble component that is generated in 16 hours in a water-absorbing resin in a 0.9% physiological saline.

[1-2-14] pH of water-absorbing resin

pH (EDANA: WSP 200.2 (10)) of a dispersion liquid in a case where the water-absorbing resin is dispersed in physiological saline (0.9 weight%).

[1-2-15] Other

In the present specification, any range of "X to Y" denotes "X or more and Y or less".
In the present specification, "ppm" means "ppm by weight", unless otherwise specifically noted.
In the present specification, "... acid (salt)" means "... acid and/or a salt(s) thereof". "(meth)acrylic" means "acrylic and/or methacrylic".
In the present specification, a unit "liter" of a volume may be denoted as "l" or "L".
In the present specification, the following pairs of words are used as synonyms: "weight" and "mass"; "weight%" and "mass%"; and "parts by weight" and "parts by mass".

(1-3) Recycled water-absorbing resin

[1-3-1] Method (I) for producing recycled water-absorbing resin

A method for producing a recycled water-absorbing resin which is applied to the first embodiment of the present invention is not particularly limited, provided that a water-absorbing resin that has physical properties described later can be obtained by that method. The object of an embodiment of the present invention is achieved by selecting and using, as appropriate, a recycled water-absorbing resin which has been obtained by a well-known method and which exhibits physical properties described later.
Examples of such a well-known method include methods disclosed in Japanese Patent Application Publication Tokukai Nos. 2013-198862, 2019-135046, and 2003-326161 as described above.
For example, Japanese Patent Application Publication Tokukai No. 2003-326161 discloses a method for regenerating a water-absorbing resin, in which a water-absorbing resin having absorbed urine is taken out and then subjected to washing and dehydration treatments. This method includes an operation of placing the water-absorbing resin in an environment in which an absorbed liquid (urine) absorbed by the water-absorbing resin is discharged by the washing and/or dehydration treatment(s) (e.g., an operation to change the pH, an operation to change temperature, and/or an operation in which a hydrophilic solvent is brought into contact).
It is preferable that the production method include any one of the following steps among the steps described in the above Publications: the step of washing the water-absorbing resin which has been taken out of the used absorbent article; the step of dehydrating the water-absorbing resin; and the step of regenerating the water-absorbing resin after dehydration. It is more preferable to include, among others, the step of washing and the step of dehydrating. It is particularly preferable to include all of the step of washing; the step of dehydrating; and the step of regenerating a water-absorbing resin after dehydration.
In a case where a recycled water-absorbing resin is produced from the water-absorbing resin which has been taken out from the used absorbent article, the water-absorbing resin and another constituent material(s) other than the water-absorbing resin are separated by a method in which the used absorbent article is dispersed in a water-based liquid or the like, and then the water-absorbing resin (hydrogel) is recovered.
For efficient separation and recovery of the hydrogel, it is preferable that the hydrogel is dehydrated (shrunk). In such a case, the CRC of the hydrogel is preferably decreased, and further, the CRC is preferably 3 g/g or less. The recycled water-absorbing resin (re-dried material (a)), which has been obtained through the steps of separating and recovering the hydrogel and then regenerating a water-absorbing resin and the step of drying by heating, has a CRC of 3 g/g or more. The recycled water-absorbing resin (re-dried material (a)) preferably has a CRC of 5 g/g or more, 10 g/g or more, 15 g/g or more, 20 g/g or more, 25 g/g or more, 30 g/g or more, or 40 g/g or more. Further, as described later, through the step of re-separating the constituent material(s) other than the water-absorbing resin from the water-absorbing resin (re-dried material (a)), it is possible to obtain a better recycled water-absorbing resin (re-dried material (b)).
In a case where the water-based liquid is an aqueous solution containing a hydrophilic organic solvent or an aqueous solution having a low pH (e.g., 3 or less), the hydrogel is dehydrated, and also, the CRC of a re-dried material which has been obtained through only the step of drying by heating (without the step of regenerating the water-absorbing resin) is recovered to a certain extent. Therefore, in a preferred embodiment, the water-based liquid is preferably an aqueous solution containing a hydrophilic organic solvent or an aqueous solution having a low pH from the viewpoint of shortening the steps.

Examples of such a hydrophilic organic solvent include (1) lower alcohols such as methanol, ethanol, n-propyl alcohol, isopropyl alcohol, and tert-butyl alcohol, (2) ketones such as acetone, and methyl ethyl ketone, (3) ethers such as tetrahydro furan, and dioxane, and (4) esters such as methyl acetate, methyl lactate, and ethyl lactate. Regarding the aqueous solution containing the hydrophilic organic solvent, a concentration of the hydrophilic organic solvent in the aqueous solution is preferably 35 mass% or more, more preferably 40 mass% or more, and even more preferably 45 mass% or more. The hydrophilic organic solvent can be one type of hydrophilic organic solvent or a combination of two or more types of hydrophilic organic solvents.

Examples of an acid contained in the aqueous solution having a low pH include hydrochloric acid, sulfuric acid, tartaric acid, glycolic acid, malic acid, citric acid, succinic acid, acetic acid, and/or the like can be used.

[1-3-2] Method (II) for producing recycled water-absorbing resin and method for regenerating used water-absorbing resin in hygienic material

A method including the following steps (1) to (3) (method (II) for producing a recycled water-absorbing resin) is a method found by the inventors of the present invention. According to this method, it is possible to efficiently remove a constituent material(s) other than a used water-absorbing resin, which is/are contained in a used hygienic material, from the used water-absorbing resin contained in the used hygienic material. As a result, the re-dried material (b) from which the constituent material(s) is/are sufficiently removed can be used as the recycled water-absorbing resin, and the used water-absorbing resin can be regenerated.

In other words, in a method for regenerating a constituent member of a disposable hygienic material, the inventors of the present invention obtained a dried material of a used water-absorbing resin, by removing the constituent member other than a water-absorbing resin before and after drying a hydrogel of the used water-absorbing resin. Further, the inventors of the present invention applied the dried material of the used water-absorbing resin thus obtained to a production process of a water-absorbing resin having a different performance from the dried material. Then, the inventors of the present invention have found that this makes it possible to obtain a regenerated material of the used water-absorbing resin, which is excellent in cost and performance, and thus have completed an embodiment of the present invention.

The method for producing a water-absorbing resin in accordance with the second embodiment of the present invention is preferably obtained by a method in which a recycled water-absorbing resin is obtained by a method including the following steps (1) to (3):

a step (1) in which a hydrogel of a used water-absorbing resin contained in a used hygienic material is shrunk and obtained as a shrunk hydrogel, and the shrunk hydrogel is separated from a constituent material other than the used water-absorbing resin in the used hygienic material;
a step (2) in which the shrunk hydrogel having been obtained in the step (1) is dried by heating, and a re-dried material (a) of the used water-absorbing resin is obtained; and
a step (3) in which from the re-dried material (a) of the used water-absorbing resin having been obtained in the step (2), a re-dried material (b) of the used water-absorbing resin is obtained so as to be used as the recycled water-absorbing resin, by re-separating the constituent material other than the used water-absorbing resin in the used hygienic material.

<Step (1)>

The used hygienic material which is to be regenerated in the second embodiment of the present invention can have any structure, provided that the used hygienic material is used for water-absorbing purposes. Furthermore, the water-absorbing resin in the hygienic material which has been once used may be in any swollen state. The water-absorbing resin may be uniformly swollen throughout, swollen partially differently in degree of swelling, or not swollen partially or throughout in the hygienic material. It is preferable that a hydrogel of the water-absorbing resin which has absorbed water and swollen by an average of 5 times or more relative to the weight of the water-absorbing resin is regenerated.

A separation method that can be applied in the second embodiment of the present invention can be, for example, a method in which the hygienic material is directly separated from the hydrogel by cutting finely and decomposing, according to need, the hygienic material which has been collected. Alternatively, the hygienic material may be separated from the hydrogel by dispersing the hygienic material into a solvent.

Preferably, the hygienic material can be separated from the hydrogel by dispersing the hygienic material into a solvent from the viewpoint of efficiency of decomposition of the hygienic material. Examples of the solvent used in separation include water or an organic solvent. At the time of separation, from the viewpoint of separation efficiency, the hydrogel of the water-absorbing resin may be shrunk with use of an acid, an alkali, an inorganic salt, a polyvalent metal salt, or the like.

The solvent that can be used is preferably water. The solvent such as water is used in a weight of 0.1 times to 100 times, preferably 0.5 times to 50 times, even more preferably 1 time to 10 times relative to the weight of the hygienic material. The hydrogel of the used water-absorbing resin may further swell in the solvent or aqueous solution. However, the hydrogel is separated preferably by shrinking the hydrogel and using a difference in specific gravity and/or solubility from that of the other constituent member(s) of the hygienic material.

The hydrogel of the used water-absorbing resin here may be separated from the other constituent member(s) of the hygienic material once or a plurality of times. Further, by separating the solvent and the hydrogel of the water-absorbing resin, it is possible to wash the used water-absorbing resin. The second embodiment of the present invention preferably includes a washing step for the hydrogel of the used water-absorbing resin. Further, it is possible to add, to the solvent, a sterilizer such as hypochlorous acid, an aqueous chlorine dioxide solution, ozone, hydrogen peroxide solution, or electrolyzed water (acidic electrolyzed water) in an amount of 0 weight% to 1 weight% relative to the total weight of the sterilizer and the hygienic material.

In the second embodiment of the present invention, in the step (1) of separating the hydrogel and the constituent material(s) of the hygienic material other than the water-absorbing resin from each other, a shrinking method is preferably applied to the hydrogel of the used water-absorbing resin in view of ease of separation. As the shrinking method, for example, a shrinking treatment of the following (A) or (B) is performed.

(A) A method in which a hygienic material containing a used water-absorbing resin or a cut material thereof is dispersed in a solvent (e.g., in water), and a swollen gel composed of the water-absorbing resin that has swollen (a hydrogel of the used water-absorbing resin) is shrunk with use of a monovalent or polyvalent metal ion. A metal salt used is a monovalent or polyvalent metal, preferably a polyvalent metal, particularly a salt or a hydroxide of an alkaline earth metal such as calcium and/or magnesium. The polyvalent metal, salt, or hydroxide is used in an amount of 0.01 weight% to 10 weight% relative to the total weight of the polyvalent metal, the salt, the hydroxide and the water-absorbing resin.
Examples of a method of shrinking the hydrogel with use of the monovalent or polyvalent metal ion include a method in which the monovalent or polyvalent metal salt is put in the water and stirred.
(B) A method in which a mixture containing a used water-absorbing resin and a hygienic material or a cut material of the hygienic material is dispersed in a solvent (e.g., in water), and a swollen gel composed of the used water-absorbing resin that has swollen (a hydrogel of the used water-absorbing resin) is shrunk with use of an organic acid or an inorganic acid. The acid is preferably a water-soluble organic acid or a water-soluble inorganic acid which has a molecular weight of 500 or less. The acid is preferably used in an amount of 0.01 weight% to 10 weight% relative to the total weight of the acid and the water-absorbing resin.

In the above (A) or (B), the hydrogel of the used water-absorbing resin is subjected to the shrinking treatment. Furthermore, the fluid retention capacity of the used water-absorbing resin is decreased, so that the hydrogel that has been shrunk is separated from the constituent material(s) other than the used water-absorbing resin in the used hygienic material. The fluid retention capacity is 35 g/g or less, preferably 30 g/g or less, 25 g/g or less, 20 g/g or less, 15 g/g or less, 10 g/g or less, 5 g/g or less, or less than 5 g/g, even more preferably 3 g/g or less, or less than 3 g/g. Further, from the viewpoint of separation efficiency, in the above (A) or (B), the water-soluble content of the water-absorbing resin is also decreased, and in particular, is decreased to 30 weight% or less, 20 weight% or less, 15 weight% or less, 10 weight% or less, 5 weight% or less, 3 weight% or less, or 1 weight% or less.

<Step (2)>

The hydrogel of the used water-absorbing resin which has been obtained in the above step (1) (hydrogel that has been obtained in step (1) and that has been shrunk) is further dried by heating, so that a re-dried material (a), which is a dried material of the used water-absorbing resin, is obtained. The hydrogel is dried by heating. This makes it easy to carry out a separation step (step (3)) described later. Note that the separation step described below cannot be sufficiently performed only through lyophilization or dehydration by shrinking with use of a polyvalent metal, without drying by heating.

From the viewpoint of efficiently carrying out re-separation (step (3)) after drying, a drying-by-heating temperature in the second embodiment of the present invention, i.e., a material temperature or a heating medium temperature, is preferably 120°C or higher, more preferably 130°C or higher, and even more preferably 150°C or higher. Meanwhile, the drying-by-heating temperature is preferably 250°C or lower, more preferably 230°C or lower, and even more preferably 200°C or lower. A drying time is preferably 10 minutes or longer, more preferably 20 minutes or longer, and even more preferably 30 minutes or longer, and is preferably 2 hours or shorter, more preferably 1.5 hours or shorter, and even more preferably 1 hour or shorter.

From the viewpoint of efficiently carrying out re-separation after drying (step (3)), it is preferable that the solid content of the re-dried material (a) after the drying by heating (or the solid content of re-dried material (a) which is calculated from a drying loss at the time when 1 g of particles are dried at 180°C for 3 hours) be in the following range. Specifically, the solid content is preferably 80 mass% or more, more preferably 85 mass% or more, even more preferably 90 mass% or more, and particularly preferably 92 mass% or more, and preferably 99 mass% or less, even more preferably 98 mass% or less, and particularly preferably 97 mass% or less. Note that in the following description, the moisture content of the polymer (%) = 100 - solid content (of the polymer) (%).

Examples of a drying method in the drying step (step (2)) include thermal drying, hot air drying, drying under reduced pressure, fluidized bed drying, infrared drying, microwave drying, drying by azeotropic dehydration with a hydrophobic organic solvent, high humidity drying by use of high temperature water vapor, and stirring drying in which a material to be dried is dried while being moved. Among others, stirring drying and hot air drying are preferable, from the viewpoint of drying efficiency. The stirring drying can be carried out with use of a stirring dryer such as a paddle dryer or a rotary drum dryer.

(Treatment after drying step)

From the viewpoint of efficiently carrying out re-separation (step (3)) after drying, it is preferable that a main component (50 weight% or more, and further, 80 weight% or more) of the re-dried material (a) have a particle diameter of 1 mm or less, and further, 0.5 mm or less, 0.3 mm or less, 0.2 mm or less, or 0.15 mm or less. For the re-dried material (a), the particle diameter may be adjusted by carrying out pulverization and/or classification simultaneously with or after drying in step (2). By setting the particle diameter to the above particle diameter that is not disclosed in Patent Literatures 5 to 7, 9, 14 to 18 (Patent Literature 5 in particular) and in particular, by pulverization and classification, it is possible to more favorably separate the hygienic material other than the water-absorbing resin from the dried material (re-dried material (a)) of the used water-absorbing resin. The re-dried material (a) is pulverized to a particle diameter of 1 mm or less (further, within the above range) simultaneously with or separately from the step (2) of drying by heating. The re-dried material (a) after pulverization or the re-dried material (b) described later has a particle diameter of 1 mm or less. Note that the particle diameter (particle size) can be measured by a method according to "(3) Mass-Average Particle Diameter (D50) and Logarithmic Standard Deviation ($\sigma\zeta$) of Particle Diameter Distribution" disclosed in US Patent No. 7638570.

Examples of a pulverizer which is used in the pulverization include: a high-speed rotation pulverizer such as a roll mill, a hammer mill, a screw mill, or a pin mill; a vibrating mill; a knuckle-type pulverizer; and a cylindrical mixer. Out of these examples, a roll mill is preferable from the viewpoint of efficiency of pulverization. It is also possible to employ a combination of a plurality of these pulverizers.

Examples of a method of adjusting the particle size employed in a classification step that is carried out according to need include sieve classification involving use of a JIS-standard sieve (JIS Z 8801-1(2000)) and airflow classification. Out of these examples, sieve classification is preferable from the viewpoint of classification efficiency. Note that, from the viewpoint of ease of pulverization, the classification step may be additionally carried out before a pulverizing step.

<Step (3)>

From the dried material (hereinafter referred to as "re-dried material (a)") of the used water-absorbing resin which has been obtained in the above step (2), a constituent material such as the hygienic material other than the water-absorbing resin is re-separated. The constituent material of the hygienic material other than the water-absorbing resin here is first subjected to separation (separation in step (1)) at a stage of the hydrogel. In addition, from the re-dried material (a) of the used water-absorbing resin, a trace amount of a constituent material of the hygienic material and further a metal component (e.g., metal debris such as stainless steel) that may be mixed in the production process or a recovery step are further removed through re-separation (separation in step (3)) after drying. Examples of the trace amount of the constituent material of the hygienic material include pulp, nonwoven fabric, and a (thermoplastic) adhesive.

It has been found that in a method of regenerating a specific water-absorbing resin, the presence of the constituent material of the hygienic material adversely affects the water-absorbing resin after recovery, even in a case where only a trace amount (weight%) of the constituent material of the hygienic material is present. In addition to such a constituent of the hygienic material, another component that can be mixed in various steps such as transportation, storage, separation, and regeneration of the used hygienic material, e.g., a metal component (a non-ionic metal component such as stainless steel), is preferably also further removed. It is important to re-separate such a component from the re-dried material (a) as a method that is not disclosed in Patent Literatures 17 and 18. Further, by adding, to a water-absorbing resin, the re-dried material (b) after re-separation, an excellent water-absorbing resin can be regenerated.

Re-separation of the constituent material other than the used water-absorbing resin in the used hygienic material, from the re-dried material (a) of the used water-absorbing resin, may be carried out in a wet manner (dispersion system) in a solvent (e.g., an organic solvent) with which the water-absorbing resin is non-swellable. Alternatively, the re-separation may be carried out in a dry (non-dispersed) manner without use of a dispersing solvent. The re-separation is preferably carried out in a dry manner, and the re-separation from the re-dried material (a) of the used water-absorbing resin is carried out by airflow classification or sieve classification. The mesh size of a sieve is determined as appropriate in accordance with the particle diameter of the re-dried material (a) and/or a constituent to be removed. Preferably, any one or more of sieve classification, airflow classification, metal removal by means of a magnetic force line, and color screening can be applied.

Furthermore, from the viewpoint of stability of the polymer and prevention of injury from a projection, the metal component (particularly a non-ionic metal component such as stainless steel) may be removed by, for example, a magnet (iron removal apparatus). This is a foreign substance separation which is not disclosed in Patent Literatures 5, 6, 7, 9, 14 to 18 (in particular, Patent Literature 5). The magnet to be used in removal of the metal component has a magnetic flux density of 0.05 $Wb/m^2$ (equivalent to 0.05 Tesla and 500 gauss) or more, preferably 0.5 $Wb/m^2$ or more, more preferably 0.8 $Wb/m^2$ or more, even more preferably 1.0 $Wb/m^2$ or more, and particularly preferably 1.2 $Wb/m^2$ (12000 gauss) or more. This makes it possible to efficiently detect and remove the metal foreign substance.

It is preferable that the magnet used in the removal of the metal component be disposed in a lattice form and the metal component be removed by continuously causing the re-dried material (a) to pass. Lattice spacing is preferably 5 mm or more and 30 mm or less, more preferably 5 mm or more and 25 mm or less, even more preferably 5 mm or more and 20 mm or less, yet even more preferably 5 mm or more and 15 mm or less, and particularly preferably 5 mm or more and 10 mm or less. A pitch indicating a distance between respective centers of magnets disposed in the lattice form is preferably 10 mm or more and 60 mm or less, more preferably 10 mm or more and 40 mm or less, even more preferably 10 mm or more and 35 mm or less, yet even more preferably 15 mm or more and 35 mm or less, and particularly preferably 15 mm or more and 32 mm or less.

Furthermore, in order to address the problem to be solved by an embodiment of the present invention, a colored component (colored particles) may be subjected to color screening from the re-dried material (a) with use of a color sorter. This is foreign substance separation that is not disclosed in Patent Literatures 5, 6, 7, 9, 14 to 18 (Patent Literature 5 in particular). Since the water-absorbing resin is generally white, brown and black particles are highly likely to be particles other than the water-absorbing resin. Therefore, the colored component (colored particles) can be removed from the re-dried material (a) by use of a color sorter. The color for removal is determined as appropriate. For example, colored particles satisfying $YI \geq 40$ are removed. By setting the color for removal in such a range, the used water-absorbing resin is regenerated to be a better water-absorbing resin.

Hereinafter, a re-dried material after separation of the constituent material of, for example, the hygienic material other than the absorbent resin from the re-dried material (a) is referred to as a re-dried material (b).

The content of the constituent material such as the hygienic material other than the water-absorbing resin, in the re-dried material (b) of the used water-absorbing resin, is set to 5 weight% or less, 3 weight% or less, 1 weight% or less, or 0.5 weight% or less. By setting the content in the above ranges, the used water-absorbing resin is regenerated to be a better water-absorbing resin.

In the second embodiment of the present invention, in order to easily re-separate the constituent material of the hygienic material from the re-dried material (a), the mass average particle diameter (defined by sieve classification) of the re-dried material (a) is preferably 10 pm to 600 pm, more preferably 50 pm to 500 pm, and even more preferably 100 pm to 400 pm.

In the second embodiment of the present invention, in order to address the problem to be solved by an embodiment of the present invention, the re-dried material (a) or (b) has a CRC (particularly, CRC in a case where the shrinking treatment is carried out) of 35 g/g or less, 30 g/g or less, 25 g/g or less, 20 g/g or less, 15 g/g or less, 10 g/g or less, 5 g/g or less, or less than 5 g/g, preferably 3 g/g or less or less than 3 g/g (with a lower limit value of more than 0 and approximately 0.1 g/g), respectively. A high CRC may result in insufficient separation in the above step (1).

The water-soluble content of the re-dried material (a) or (b) is 30 weight% or less, 20 weight% or less, 15 weight% or less, 13 weight% or less, or 10 weight% or less, particularly 8 weight% or less, 5 weight% or less, 3 weight% or less, or 1 weight% or less. By setting the water-soluble content in the above range that is not disclosed in Patent Literatures 5 to 7, 9, 14 to 18 (particularly, Patent Literatures 17, 18, and 5), the water-absorbing resin is regenerated to be a better water-absorbing resin.

Further, in order to reduce coloration of a resultant water-absorbing resin, as one of the problems (performance) to be solved by an embodiment of the present invention, the re-dried material (a) or (b) has a yellowness index (YI) of preferably 20 or less, 15 or less, or 10 or less in the order of preference.

Accordingly, in order to address the problem to be solved by the present invention, in the second embodiment of the present invention, it is preferable that the re-dried materials (a) and (b) of the used water-absorbing resin contain no polymer decomposition agent selected from the group consisting of oxidizers and reducing agents. Alternatively, in a case where the re-dried materials (a) and (b) contain the polymer decomposition agent, the amount of the polymer decomposition agent contained is preferably 1000 ppm or less. Further, the polymer-decomposition agent may be at least one selected from the group consisting of an L-ascorbic acid (salt), a (hydrogen) sulfite, a chlorite, a hypochlorite, hydrogen peroxide, and Fe. In a case where the polymer decomposition agent is contained, the amount of the polymer decomposition agent contained is preferably 500 ppm or less, more preferably 100 ppm or less, and even more preferably 10 ppm or less. It is possible to control a residual amount (ppm) of the polymer decomposition agent after drying to a low level by using no polymer decomposition agent, using the polymer decomposition agent in a predetermined amount or less, or adjusting a drying condition (e.g., causing pyrolysis of the polymer decomposition agent). This makes it possible to obtain a water-absorbing resin which has better performance with use of the re-dried material (b). In the second embodiment of the present invention, mixing of the polymer decomposition agent in the production process of the water-absorbing resin can be controlled to be a low level by the step (2) of drying by heating the hydrogel, which is not disclosed in Patent Literatures 17 and 18. Thus, better regeneration of the used water-absorbing resin becomes possible.

Further, in order to address the problem to be solved by an embodiment of the present invention, further, the content of the metal component (particularly a non-ionic metal component such as stainless steel), which is not disclosed in Patent Literatures 5 to 7, 9, 14 to 18, is preferably 10 ppm or less, 5 ppm or less, or 1 ppm or less in the re-dried materials (a) and (b). The amount of the metal component can be removed by the above classification, and further with use of an iron remover or a color sorter.

[1-3-3] Physical properties of recycled water-absorbing resin

In an embodiment of the present invention, a recycled water-absorbing resin obtained by a well-known method described above, or the re-dried material (b) is used as the recycled water-absorbing resin. Note that the "embodiment of the present invention" refers to the first embodiment and the second embodiment of the present invention.

In order to suitably carry out an embodiment of the present invention, the water-soluble content (Ext) of the recycled water-absorbing resin should be set within a range indicated below. In order to more suitably carry out an embodiment of the present invention, further, particle size distribution, moisture content, initial color tone, amount of residual urea, residual monomer, content of contraries, and bulk density of the recycled water-absorbing resin should be set to be within respective ranges indicated below.

("Ext" (Water-soluble content) (ERT 470.2-02))

The term "Ext" is an abbreviation for "Extractables" and refers to a water soluble component (water-soluble component amount) of a water-absorbing resin. Specifically, the Ext refers to a dissolved polymer amount (unit; weight%) obtained by adding 1.0 g of a water-absorbing resin to 200 ml of a 0.9 weight% aqueous sodium chloride solution and stirring a resultant mixture at 500 rpm for 16 hours. Note that the dissolved polymer amount is measured by pH titration. From the viewpoint of water absorption performance of the water-absorbing resin after mixing, the "Ext" of the recycled water-absorbing resin is 30 weight% or less, preferably 15 weight% or less, more preferably 13 weight% or less, even more preferably 10% or less, and particularly preferably 8 weight% or less. The Ext has no particular lower limit, but the lower limit is preferably 0 weight%, and more preferably 0.1 weight%.

(Moisture content)

The moisture content of the recycled water-absorbing resin is preferably 30 weight% or less, more preferably 25 weight% or less, and even more preferably 20 weight% or less.

In a case where the moisture content is set within the above range, it is possible to obtain a water-absorbing resin excellent in powder properties (e.g., flowability, transportability, damage resistance, and the like).

Note that the moisture content was measured in conformity with an EDANA method (ERT 430.2-02). In an embodiment of the present invention, in measurements of the moisture content, the amount of a sample was changed to 1.0 g, and the drying temperature was changed to 180°C.

(Initial color tone of water-absorbing resin)

A water-absorbing resin that can be suitably used for hygienic materials such as disposable diapers is preferably a white powder. Therefore, the recycled water-absorbing resin has a YI value (yellowness index) of the initial color tone (also called "initial coloration") of preferably 35 or less, more preferably 30 or less, even more preferably 25 or less, yet even more preferably 20 or less, and most preferably 15 or less. The YI value is measured by a spectral colorimeter.

Note that the initial color tone is a color obtained after production of the water-absorbing resin, and is, generally, a color measured before shipment from a plant. Alternatively, the initial color tone is for example, a value which is measured within 1 year after production, provided that the water-absorbing resin is stored in an atmosphere at a temperature of 30°C or lower and a relative humidity of 50%RH.

(Residual monomer)

From the viewpoint of safety, a content of a residual monomer(s) contained in the recycled water-absorbing resin is preferably 500 ppm or less, more preferably 300 ppm or less, even more preferably 200 ppm or less, and most preferably 100 ppm or less. The content of the residual monomer(s) has no particular lower limit, but the lower limit is preferably 0 ppm, and more preferably approximately 10 ppm.

By setting the content of the residual monomer(s) in the above range, it is possible to obtain a water-absorbing resin which causes less irritation to, for example, skin of a human body.

Note that the residual monomer(s) is measured in conformity with an EDANA method (ERT410.2-02).

(Amount of residual urea)

By the washing and/or dehydration treatment(s) of the water-absorbing resin with use of a water-based liquid, it is possible to reduce impurities originating from human waste contained in the water-absorbing resin. This makes it possible to prevent deterioration of water absorption performance of a regenerated water-absorbing resin and to reduce coloration of the regenerated water-absorbing resin.

It is possible to prevent a deterioration in water absorption performance of the water-absorbing resin and to reduce coloration by setting an amount of residual urea, which is contained at a relatively large ratio or in a relatively large amount among the impurities originating from human waste, to preferably 2 weight% or less, in the recycled water-absorbing resin. The amount of residual urea is more preferably 1.8 weight% or less, and even more preferably 1.6 weight% or less.

There is no particular limitation on a method of quantifying urea which remains in the water-absorbing resin, provided that the urea can be quantified by the method. Examples of the method include a method in which after a water-absorbing resin is dispersed in water and thus urea contained in the water-absorbing resin is extracted in a water layer, the urea contained in the water layer is directly quantified by liquid chromatography, gas chromatography, or the like. It is also possible to use, as a quantification method, a colorimetric method such as a urease indophenol method or a diacetyl monoxime method.

The following description will discuss an example of a device and a method for measuring the amount of residual urea in a water-absorbing resin.

In a plastic container that has a volume of 250 ml and that is provided with a lid, 200.0 g of 0.9 mass% saline solution is weighed and taken. Then, into this aqueous solution, 1.00 g of a water-absorbing resin is added, and stirring is carried out by rotating a stirrer for 16 hours. Thus, urea contained in the resin is extracted. This extraction liquid is filtered (0.45 pm) and a resultant filtrate is analyzed by liquid chromatography (HPLC), so that a urea content of the water-absorbing resin is determined.

(Content of contraries)

The content of contraries contained in the recycled water-absorbing resin is preferably 5 $mm^2$/100 g or less, more preferably 3 $mm^2$/100 g or less, and most preferably 1 $mm^2$/100 g or less, or substantially 0 (not detectable). When the content of contraries is 5 $mm^2$/100 g or less, the contraries can barely be observed with the naked eyes. This is of critical importance in actual use of diapers and the like. Within such a range, contraries even in white pulp, such as diapers or napkins, give no feeling of the presence of a foreign body to users.

Note that the content of contraries ($mm^2$/100 g) was measured in conformity with JIS P8208 (1998) "Test method for contraries in pulp for paper production". In other words, a "chart for measurement of contraries (Foundation Insatsu Kyoku (Printing Bureau); available from Choyokai Co., Ltd. (Kita-ku, Tokyo))" and a "device for measurement of contraries", which are shown as examples in JIS P8208, are used. Then, figures corresponding to 14 levels of shown areas from 0.05 $mm^2$ to 5.0 $mm^2$ specified in the chart for measurement of contraries (made of transparent polyester film) are overlaid on a water-absorbing resin powder, and a figure closest in size and shape is selected. From the sum of all areas shown and selected, an area of contraries is determined by comparative measurement (for example, in a case where 10 particles of contraries each having an area of 0.05 $mm^2$ are contained in 100 g of a recycled water-absorbing resin, the content of contraries is 0.5 $mm^2$/100 g).

Note that, according to JIS P8208, the term "contraries" is a collective term of dirt and shives contained in pulp, and is an opaque part or a part having a different color from other pars. However, in the present specification, the term "contraries" is defined as a colored particle(s) (usually: black or brown) that can be visually distinguished according to JIS P8208, relative to a recycled water-absorbing resin (e.g., YI ≤ 30).

(Bulk density)

The bulk density of the recycled water-absorbing resin is preferably 0.3 or more and 0.9 or less, and more preferably 0.4 or more and 0.8 or less. In a case where the bulk density is 0.3 or more, advantageously, the recycled water-absorbing resin can be compactly transported. On the other hand, in a case where the bulk density is 0.9 or less, a production trouble resulting from close packing of the recycled water-absorbing resin can be prevented.

Note that the "bulk density" (unit: g/ml) is a value that represents, as a weight per unit volume, a total weight at the time when a container having a certain volume is filled with an aggregate of particles. The "bulk density" was measured according to a measuring method disclosed in Japanese Patent Application Publication Tokukai No. 2000-302876.

(Particle size distribution)

The recycled water-absorbing resin has a particle diameter distribution in which a proportion of particles having a particle diameter ranging from 850 pm to 150 pm relative to all the recycled water-absorbing resin is 70 weight% or more, preferably 80 weight% or more, more preferably 90 weight% or more, and most preferably 95 weight% or more. The particle diameter distribution is measured by a measuring method in conformity with "(3) Mass-Average Particle Diameter (D50) and Logarithmic Standard Deviation ($\sigma\zeta$) of Particle Diameter Distribution" disclosed in US Patent No. 7638570. Note, however, that sieves used were JIS-standard sieves having a mesh size of 850 pm and a mesh size of 150 pm and recipient dishes (THE IIDA TESTING SIEVE: 8 cm in diameter).

(1-4) Method for producing water-absorbing resin in which monomer is used as raw material

A method for producing a water-absorbing resin in which a monomer is a raw material is not particularly limited, provided that the method is a general production method. Specifically, the production method may be any method that includes some or all of general steps (an aqueous monomer solution preparation step, a polymerization step, a hydrogel-crushing step, a drying step, a pulverization and classification step, a surface-crosslinking step, a sizing step, a product filling step, and a fine powder recovery step) of a water-absorbing resin which will be described below.

[1-4-1] Aqueous monomer solution preparation step

This step is a step of preparing an aqueous solution (hereinafter, referred to as "aqueous monomer solution") which contains an acrylic acid (salt) as a main component. The aqueous monomer solution contains at least one internal crosslinking agent. Note that a monomer slurry liquid can be used within a range in which the water absorption performance of a water-absorbing resin to be obtained does not deteriorate. However, for convenience, this section discusses the aqueous monomer solution.

Further, the above "main component" means that the amount (content) of the acrylic acid (salt) used is ordinarily 50 mol% or more, preferably 70 mol% or more, and more preferably 90 mol% or more (upper limit is 100 mol%) relative to a total amount of monomers (excluding the internal crosslinking agent) which are subjected to a polymerization reaction of the water-absorbing resin.

(Acrylic acid)

Examples of the monomer used in an embodiment of the present invention include unsaturated monomers containing an acrylic acid, 2-(meth)acrylic amido-2-methyl propanesulfonate, 2-(meth)acryloyl ethane sulfonic acid, (meth)acrylamide, and the like. Further, examples of the monomer include a water-soluble unsaturated monomer and a hydrophobic unsaturated monomer. Among others, an acrylic acid (salt) is preferable. Further, the acrylic acid (salt) and another monomer(s) may be used in combination. In such a case, the amount (content) of the acrylic acid (salt) used is as described above.

In an embodiment of the present invention, from the viewpoint of physical properties and productivity of a water-absorbing resin to be obtained, the acrylic acid and/or a salt thereof (hereinafter, referred to as "acrylic acid (salt)") is preferably used as a monomer.

The above "acrylic acid" may be a well-known acrylic acid. From the viewpoint of polymerizability of the acrylic acid and color of the water-absorbing resin, the "acrylic acid" may include, as a polymerization inhibitor, preferably a methoxyphenol, and more preferably, p-methoxyphenol, in an amount of preferably 200 ppm or less, more preferably 10 ppm to 160 ppm, and even more preferably 20 ppm to 100 ppm. Further, as an impurity in the acrylic acid, the compound disclosed in US Patent Application Publication No. 2008/0161512 is also applicable to an embodiment of the present invention.

Further, the above "acrylic acid salt" is a product of neutralization of the above acrylic acid with a basic composition described below. The acrylic acid salt may be a commercially available acrylic acid salt (e.g., sodium acrylate), or may be a salt obtained by neutralization in a production plant for a water-absorbing resin.

(Basic composition)

In an embodiment of the present invention, the term "basic composition" refers to a composition which contains a basic compound. The "basic composition" is, for example, a commercially available aqueous sodium hydroxide solution.
Specific examples of the basic compound include a carbonate salt and/or a hydrocarbon salt of an alkali metal, a hydroxide of an alkali metal, ammonia, and an organic amine. Among these compounds, the basic compound is preferably a strongly basic compound from the viewpoint of physical properties of a water-absorbing resin to be obtained. In other words, the basic compound is preferably a hydroxide of an alkali metal such as sodium hydroxide, potassium hydroxide, and lithium hydroxide, and more preferably, sodium hydroxide.

(Neutralization)

As neutralization in an embodiment of the present invention, it is possible to select one or use a combination of both of the following: neutralization (before polymerization) of an acrylic acid; and neutralization (after polymerization) of a crosslinked hydrogel polymer which is obtained by crosslinking the acrylic acid (hereinafter, referred to as "post-neutralization"). Further, although the neutralization can be of a continuous type or a batch type and is not particularly limited, neutralization of a continuous type is preferable from the viewpoint of production efficiency or the like.
Note that for conditions such as a neutralizing device, a neutralizing temperature, and a retention time, the conditions described in International Publication No. WO 2009/123197, US Patent Application Publication No. 2008/0194863, and the like are applicable to an embodiment of the present invention.
A neutralization rate of the acrylic acid (salt) in an embodiment of the present invention is preferably 10 mol% or more, more preferably 40 mol% or more, even more preferably 50 mol% or more, and particularly preferably 60 mol% or more, and preferably 90 mol% or less, more preferably 85 mol% or less, even more preferably 80 mol% or less, and particularly preferably 75 mol% or less, relative to acid groups of monomers. In a case where the neutralization rate is less than 10 mol%, the fluid retention capacity may be significantly decreased. On the other hand, in a case where the neutralization rate is more than 90 mol%, a water-absorbing resin which has a high fluid retention capacity under pressure may not be obtained.
The above neutralization rate also applies to the case of post-neutralization. Further, the above neutralization rate is also applied to the neutralization rate of the water-absorbing resin as an end product. Note that a neutralization rate of 75 mol% means a mixture of 25 mol% of an acrylic acid and 75 mol% of an acrylic acid salt. Further, the mixture may also be referred to as a partially neutralized acrylic acid product.
Preferably, the above-described re-dried material (b), or further, a re-dried material (b) which is more acidic or more basic or which has a lower neutralization rate or a higher neutralization rate relative to the acrylic acid (salt) having a neutralization rate in such a neutral range is used. In this case, it is also preferable that the re-dried material (b) which has a low neutralization rate or a high neutralization rate be regenerated as a neutral re-dried material (b) by a contact with a monomer or a hydrogel in a production process of a water-absorbing resin.

(Other monomer(s))

In an embodiment of the present invention, the term "other monomer(s)" refers to a monomer excluding the above acrylic acid (salt). It is possible to produce a water-absorbing resin by using the "other monomer(s)" in combination with the acrylic acid (salt).
Examples of such another monomer described above include a water-soluble and hydrophobic unsaturated monomers. Specifically, the compound (except acrylic acid) disclosed in US Patent Application Publication No. 2005/0215734, the above-described unsaturated monomers, and the like are also applicable to an embodiment of the present invention.

(Internal crosslinking agent)

In a preferred production method according to an embodiment of the present invention, an internal crosslinking agent is used. As the internal crosslinking agent, specifically, a crosslinking agent which has a plurality of unsaturated functional groups that are copolymerize with monomers or a plurality of functional groups that can react with functional groups of monomers (particularly carboxyl groups) is preferably used.
As the internal crosslinking agent used in an embodiment of the present invention, the compounds disclosed in US Patent No. 6241928 are also applicable to an embodiment of the present invention. Further, examples of the internal crosslinking agent include N,N'-methylene-bis(meth)acrylamide, (poly)ethylene glycol di(meth)acrylate, (poly)propylene glycol di(meth)acrylate, trimethylolpropane di(meth)acrylate, trimethylolpropane tri(meth)acrylate, glycerin tri(meth) acrylate, poly(meth) allyloxyalkane, (poly)ethylene glycol diglycidyl ether, and glycerol diglycidyl ether. From among these compounds, one kind or two or more kinds of compounds are selected in consideration of reactivity.

Further, from the viewpoint of water absorption performance and the like of a water-absorbing resin to be obtained, preferably a compound which has two or more polymerizable unsaturated groups, more preferably a compound which has a pyrolytic property at a drying temperature described below, or even more preferably a compound which includes two or more polymerizable unsaturated groups and which has a (poly)alkylene glycol structural unit is used as the internal crosslinking agent.

The polymerizable unsaturated groups are each preferably an allyl group or a (meth)acrylate group, and more preferably a (meth)acrylate group. Further, preferably, polyethylene glycol is used as the above-described (poly)alkylene glycol structural unit, and the number n of structural units is preferably 1 to 100, and more preferably 6 to 50.

The amount of the internal crosslinking agent to be used is preferably 0.0001 mol% or more, more preferably 0.001 mol% or more, and even more preferably 0.01 mol% or more, and preferably 10 mol% or less, more preferably 5 mol% or less, and even more preferably 1 mol% or less, relative to a total amount of monomers excluding the internal crosslinking agent.

It is possible to obtain a desired water-absorbing resin by setting the amount of the internal crosslinking agent used within the above range. Note that an excessively small amount of the internal crosslinking agent used results in a decreased gel strength and tends to consequently increase a water-soluble content whereas an excessively large amount of the internal crosslinking agent tends to result in a decreased fluid retention capacity, and thus the excessively small amount and the excessively large amount are not preferable.

In an embodiment of the present invention, the following method is preferably applied: a method in which a predetermined amount of the internal crosslinking agent is added to an aqueous monomer solution in advance and a crosslinking reaction is carried out simultaneously with polymerization. In addition to the above method, it is possible to employ, for example, a method in which the internal crosslinking agent is added during and/or after the polymerization so that post-crosslinking is carried out; a method in which radical crosslinking is carried out with use of a radical polymerization initiator; and/or a method in which radiation crosslinking is carried out with use of an active energy ray such as an electron ray or an ultraviolet ray. Further, it is possible to use two or more of the above methods in combination.

(Other substance(s) added to aqueous monomer solution)

In an embodiment of the present invention, a substance (third component) other than the monomer and the crosslinking agent can be added to the aqueous monomer solution, from the viewpoint of improvement of physical properties of a water-absorbing resin to be obtained.

A total amount of the third component added is, in solid content, preferably 50 weight% or less, more preferably 20 weight% or less, even more preferably 10 weight% or less, and particularly preferably 5 weight% or less, and preferably 0 weight% or more, and more preferably more than 0 weight% relative to a total weight of the solid content of the third component and the solid content of the monomers excluding the internal crosslinking agent.

A lower limit of the total amount of the third component added is, in solid content, preferably 0.01 weight%, more preferably 0.1 weight%, even more preferably 0.2 weight%, particularly preferably 0.5 weight%, and most preferably 1 weight% relative to the total weight of the solid content of the third component and the solid content of the monomers excluding the internal crosslinking agent. An upper limit of the total amount of the third component added is, in solid content, preferably 50 weight%, more preferably 40 weight%, even more preferably 30 weight%, particularly preferably 20 weight%, and most preferably 1 weight%.

Specifically, it is possible to add, for example: a hydrophilic polymer(s) such as starch, a starch derivative, cellulose, a cellulose derivative, polyvinyl alcohol, a polyacrylic acid (salt), and/or a crosslinked polyacrylic acid (salt), in an amount of preferably 50 weight% or less, more preferably 20 weight% or less, even more preferably 10 weight% or less, and particularly preferably 5 weight% or less (lower limit is 0 weight%); and a blowing agent(s) such as a carbonate and/or an azo compound, a surfactant, a chelating agent, a chain transfer agent, and/or the like, in an amount of preferably 5 weight% or less, more preferably 1 weight% or less, and even more preferably 0.5 weight% or less (lower limit is 0 weight%).

The above substances are not necessarily added to the aqueous monomer solution, but can be added during the polymerization, or can be added both to the aqueous monomer solution and during the polymerization.

Note that in a case where a water-soluble resin or a water-absorbing resin is used as the hydrophilic polymer, a graft polymer or a water-absorbing resin composition (e.g., starch-acrylic acid polymer, PVA-acrylic acid polymer, etc.) is obtained. These polymers and water-absorbing resin compositions are also encompassed in the scope of the present invention.

(Monomer component concentration)

By selecting some of the above-described substances and components (including the monomers, the internal crosslinking agent(s), and the third component(s); hereinafter, also referred to as "monomer components") according to the purpose, and mixing the monomer components in amounts within the above ranges, the aqueous monomer solution is prepared. Note that, in an embodiment of the present invention, the monomer can be prepared as a mixed solution of water and a hydrophilic solvent other than as an aqueous solution.

A total concentration of the monomer components in the aqueous monomer solution may be any concentration. The concentration is preferably 10 weight% or more, more preferably 20 weight% or more, even more preferably 30 weight% or more, from the viewpoint of the physical properties of the water-absorbing resin. Further, the concentration is preferably 80 mass% or less, more preferably 75 mass% or less, and even more preferably 70 mass% or less.

[1-4-2] Polymerization step

This step is a step of polymerizing an acrylic acid (salt)-based aqueous monomer solution obtained in the aqueous monomer solution preparation step, so that a crosslinked hydrogel polymer (hereinafter referred to as "hydrogel") is obtained.

(Polymerization initiator)

The polymerization initiator used in an embodiment of the present invention is selected as appropriate according to a type of monomer to be polymerized, a form of polymerization, and the like. The polymerization initiator is not particularly limited since one or more types of the polymerization initiators can be selected from among the polymerization initiators used in ordinary production of water-absorbing resins.

Examples of the polymerization initiator include a pyrolysis-type polymerization initiator, a photolytic-type polymerization initiator, and a redox-type polymerization initiator which is used in combination with a reducing agent that facilitates decomposition of the pyrolysis-type polymerization initiator and the photolytic-type polymerization initiator. Specifically, one or more of the polymerization initiators disclosed in US Patent No. 7265190 can be used as the polymerization initiator. Note that from the viewpoint of the handleability of the polymerization initiator and/or the physical properties of the water-absorbing resin, the polymerization initiator is preferably a peroxide or an azo compound, more preferably a peroxide, and even more preferably a persulfate.

The amount of the polymerization initiator used is, in solid content, preferably 0.001 mol% or more, and more preferably 0.01 mol% or more, and preferably 1 mol% or less, more preferably 0.5 mol% or less, and even more preferably 0.1 mol% or less, relative to the total number of moles of the solid content of the polymerization initiator used and the total content of the monomers excluding the internal crosslinking agent. The amount of the reducing agent used is preferably 0.0001 mol% to 0.02 mol% in solid content relative to the total number of moles of the solid content of the reducing agent and the solid content of the monomer excluding the internal crosslinking agent.

Note that in place of the above polymerization initiator, the polymerization reaction may be carried out by irradiation with an active energy ray such as a radial ray, an electron beam, or an ultraviolet ray, or the polymerization initiator may be used in combination with any of these active energy rays.

(Form of polymerization)

The form of polymerization which is applied to an embodiment of the present invention is not particularly limited. From the viewpoint of the water absorbent property, easy control of polymerization, and the like, preferable examples of the form of polymerization include spray droplet polymerization, aqueous solution polymerization, reversed phase suspension polymerization, droplet polymerization, bulk polymerization, and precipitation polymerization. The form of polymerization is more preferably aqueous solution polymerization or reversed phase suspension polymerization, and even more preferably the aqueous solution polymerization. Among others, from the viewpoint of the easy control of polymerization and the water absorption performance of the water-absorbing resin, the aqueous solution polymerization or the reversed phase suspension polymerization is preferable, the aqueous solution polymerization is more preferable, and continuous aqueous solution polymerization is even more preferable. Continuous aqueous solution polymerization is particularly preferable, and can be any one of continuous belt polymerization and continuous kneader polymerization.

As specific forms of polymerization, the continuous belt polymerization is disclosed in, for example, US Patent Nos. 4893999 and 6241928, and US Patent Application Publication No. 2005/215734, and the continuous kneader polymerization is disclosed in, for example, US Patent Nos. 6987151 and 6710141. By employing these forms of continuous aqueous solution polymerization, it is possible to improve efficiency of production of the water-absorbing resin.

Further, preferable examples of a form of the continuous aqueous solution polymerization include "high-temperature initiated polymerization", "high-concentration polymerization", and "foaming polymerization".

The term "high-temperature initiated polymerization" refers to a form in which the temperature of an aqueous monomer solution is set to preferably 30°C or more, more preferably 35°C or more, even more preferably 40°C or more, and particularly preferably 50°C or more (upper limit is the boiling point of the aqueous monomer solution) when the polymerization is started.

The "high-concentration polymerization" refers to a form of polymerization in which polymerization is carried out while a monomer concentration is set to preferably 30 weight% or more, more preferably 35 weight% or more, even more preferably 40 weight% or more, and particularly preferably 45 weight% or more (upper limit is a saturated concentration of the aqueous monomer solution).

The "foaming polymerization" refers to a form of polymerization in which an aqueous monomer solution including a blowing agent or gas bubbles is polymerized. Note that one of these forms of polymerization may be carried out alone, or two or more of these forms may be carried out in combination.

In an embodiment of the present invention, polymerization can be carried out in an air atmosphere. From the viewpoint of color of a water-absorbing resin to be obtained, polymerization is carried out preferably in an atmosphere of inert gas such as nitrogen or argon. In such a case, an oxygen concentration is preferably controlled to be, for example, 1 volume% or less. Note that it is preferable to also replace dissolved oxygen in the aqueous monomer solution with inert gas (e.g., dissolved oxygen: less than 1 mg/l).

Alternatively, in an embodiment of the present invention, the form of polymerization can be foaming polymerization in which polymerization is carried out while gas bubbles (particularly the inert gas or the like) are dispersed into an aqueous monomer solution.

[1-4-3] Hydrogel-crushing step

This step is a gel-crushing step of obtaining a hydrogel in a particulate form which has been subjected to grain refining so as to have a predetermined size by kneading or crushing the hydrogel (crosslinked hydrogel polymer) having been obtained in the above polymerization step. This step is a step of gel-crushing a hydrogel with use of, for example, a kneader, a screw extruder such as a meat chopper, or a gel crusher such as a cutter mill in order to obtain a hydrogel in the form of particles (hereinafter referred to as "particulate hydrogel"). Note that in a case where the polymerization step is carried out through kneader polymerization, the polymerization step and the gel-crushing step are carried out simultaneously. Further, in a case where the particulate hydrogel is directly obtained through a polymerization process, such as vapor phase polymerization or reversed phase suspension polymerization, the gel-crushing step may not be carried out.

With regard to gel-crushing conditions and forms other than above described, any of conditions and forms disclosed in International Publication No. WO 2011/126079 can be preferably employed in an embodiment of the present invention.

For the purpose of uniform and efficient drying, the moisture content of the particulate hydrogel is preferably 30 mass% or more, and more preferably 45 mass% or more, and preferably 70 mass% or less, and more preferably 55 mass% or less.

[1-4-4] Drying step

This step is a step of drying the particulate hydrogel, which has been obtained by the polymerization step and/or the gel-crushing step, until a desired resin solid content is attained, and thus obtaining a dried polymer. The resin solid content is found from an amount lost from drying (that is, a weight change caused to 1 g of water-absorbing resin upon heating at 180°C for 3 hours). The resin solid content is preferably not less than 80 weight% or more, more preferably 85 weight% to 99 weight%, further preferably 90 weight% to 98 weight%, particularly preferably 92 weight% to 97 weight%.

A drying method of drying the particulate hydrogel is not particularly limited. Examples of the drying method include thermal drying, hot air drying, drying under reduced pressure, fluidized bed drying, infrared drying, microwave drying, drum dryer drying, drying by azeotropic dehydration with a hydrophobic organic solvent, and high humidity drying by use of high temperature water vapor. The drying method is, among others, preferably hot air drying, more preferably band drying, in which hot air drying is performed on a through-flow belt, from the viewpoint of drying efficiency.

From the viewpoint of, for example, the color of a water-absorbing resin to be produced and drying efficiency, the hot air drying is performed at a drying temperature (temperature of hot air) of preferably 120°C to 250°C, more preferably 150°C to 200°C. Note that drying conditions other than the drying temperature (e.g., the air velocity of hot air and the drying time) can be set as appropriate in accordance with moisture content of the particulate hydrogel to be dried, total weight of the particulate hydrogel to be dried, and a desired resin solid content. When band drying is carried out, the various conditions disclosed in, for example, International Publication Nos. WO 2006/100300, WO 2011/025012, WO 2011/025013, and WO 2011/ 111657 can be applied as necessary.

Setting the drying temperature, the drying time, and the like described above within the above ranges makes it possible to obtain a water-absorbing resin whose fluid retention capacity (CRC), water-soluble content (Ext), and color are within desired ranges (see [1-3-3] described above).

[1-4-5] Pulverizing and classification steps

These steps are steps of pulverizing (pulverizing step) the dried polymer obtained in the drying step and adjusting (classification step) the particle size of a resulting pulverized polymer to a particle size within a certain range so that a water-absorbing resin powder is obtained (for convenience, water-absorbing resin in a powder form before being subjected to surface crosslinking is referred to as "water-absorbing resin powder"). Note that, from the viewpoint of ease of pulverization, the classification step may be additionally carried out before the pulverization step.

An apparatus used in the pulverizing step of an embodiment of the present invention can be, for example, a high-speed rotation pulverizer such as a roll mill, a hammer mill, a screw mill, or a pin mill; a vibrating mill; a knuckle-type pulverizer; a cylindrical mixer; or the like. These apparatuses can be used in combination according to need.

A particle size adjusting method in the classification step of an embodiment of the present invention is not limited to a particular one and can be, for example, sieve classification with use of one or more JIS standard sieves (JIS Z8801-1 (2000)), airflow classification, or the like. Note that the particle size of water-absorbing resin is not necessarily adjusted during the pulverizing step or classification step, but may alternatively be adjusted as appropriate during the polymerization step (in particular, in reversed phase suspension polymerization or spray droplet polymerization) or some other step(s) (for example, a granulation step and/or a fine powder recovery step).

[1-4-6] Surface-crosslinking step

This step is a step of forming a portion with a higher crosslinking density in a surface layer (that is, a portion of water-absorbing resin powder which is up to several tens of micrometers deep from the surface) of the water-absorbing resin powder produced through the above steps. This step includes a mixing step, a heat treatment step, and (optionally) a cooling step.

The water-absorbing resin particles obtained through the above steps are preferably subjected to a surface-crosslinking treatment so that a crosslinking density at and in the vicinities of the surfaces of the water-absorbing resin particles is increased and the properties of the water-absorbing resin are improved.

In the surface-crosslinking step, a water-absorbing resin (water-absorbing resin particles) can be obtained which has been surface-crosslinked by radical crosslinking, surface polymerization, crosslinking reaction with a surface-crosslinking agent, or the like on the surface of the water-absorbing resin powder.

(Surface-crosslinking agent)

A surface-crosslinking agent used in an embodiment of the present invention is not limited to any particular one. Examples of the surface-crosslinking agent include an organic surface-crosslinking agent and an inorganic surface-crosslinking agent. Among others, an organic surface-crosslinking agent that is reactive with a carboxyl group is preferable, from the viewpoint of the physical properties of a water-absorbing resin and the handleability of the surface-crosslinking agent. It is preferable to select a surface-crosslinking agent that has two or more functional groups reactive to a carboxyl group and that is an organic compound forming a covalent bond. For example, one of the surface-crosslinking agents disclosed in US Patent No. 7183456 can be used, or two or more of the surface-crosslinking agents disclosed in US Patent No. 7183456 can be used. Specifically, examples of the surface-crosslinking agent encompass a polyhydric alcohol compound, an epoxy compound, a haloepoxy compound, a polyamine compound, a condensed product with a haloepoxy compound of the polyamine compound, an oxazoline compound, an oxazolidinone compound, a polyvalent metal salt, an alkylene carbonate compound, a cyclic urea compound, and the like.

More specific examples of the surface-crosslinking agent include: polyhydric alcohol compounds such as (mono-, di-, tri-, tetra-, poly-)ethylene glycols, 1,3-propanediol, propylene glycol, butanediol, pentanediol, and hexanediol; alkylene carbonate compounds such as 1,3-dioxolan-2-one (ethylene carbonate) and 4-methyl-1,3-dioxolan-2-one; polyglycidyl compounds such as (mono-, di-, tri-, poly-)ethylene glycol diglycidyl ether and (poly)glycerol polyglycidyl ether; an oxetane compound; a vinyl ether compound; and a cyclic urea compound.

The amount of the surface-crosslinking agent used, or in a case where a plurality of kinds of surface-crosslinking agents are used, the total amount of surface-crosslinking agents used is preferably 0.01 parts by weight or more, and is preferably 10 parts by weight or less, more preferably 5 parts by weight or less, and even more preferably 2 parts by weight or less, relative to 100 parts by weight of the water-absorbing resin before surface-crosslinking.

Preferably, the surface-crosslinking agent is added, in the form of an aqueous solution, to the water-absorbing resin before surface-crosslinking. In such a case, an amount of water used is preferably 0.1 parts by weight or more, more preferably 0.3 parts by weight or more, and even more preferably 0.5 parts by weight or more, and preferably 20 parts by weight or less, more preferably 15 parts by weight or less, and even more preferably 10 parts by weight or less, relative to 100 parts by weight of the water-absorbing resin before surface-crosslinking.

In addition, a hydrophilic organic solvent may be used in combination with water, as needed, so as to prepare the surface-crosslinking agent solution. In this case, the amount of the hydrophilic organic solvent used is preferably 10 parts by weight or less, preferably 5 parts by weight or less, more preferably 3 parts by weight or less, and even more preferably 1 part by weight% or less, relative to 100 parts by weight of the water-absorbing resin before surface-crosslinking.

The temperature of the surface-crosslinking agent solution is preferably 0°C to boiling point, more preferably 5°C to 50°C, and even more preferably 10°C to 30°C, from the viewpoint of mixability and stability. The temperature of the water-absorbing resin before mixing the surface-crosslinking agent solution is within the range of preferably 0°C to 80°C, and more preferably 40°C to 70°C, from the viewpoint of mixability.

(Mixing step)

This step is a step of mixing the water-absorbing resin powder and the surface-crosslinking agent. A method of mixing the surface-crosslinking agent is not limited to a particular one and can be a method in which a surface-crosslinking agent solution is prepared in advance, and the surface-crosslinking agent solution is mixed with the water-absorbing resin powder preferably by spraying or dropping the surface-crosslinking agent solution onto the water-absorbing resin powder, more preferably by spraying the surface-crosslinking agent solution onto the water-absorbing resin powder. The surface-crosslinking agent solution can be prepared by mixing, in advance according to need, the surface-crosslinking agent with water and/or the hydrophilic organic solvent. The surface-crosslinking agent solution is sprayed in the form of liquid droplets that are, in average, preferably 0.1 pm to 300 pm, and more preferably 10 pm to 200 pm.

The above mixing may be performed with use of any device. The device is preferably a high-speed stirring mixer, more preferably a high-speed stirring continuous mixer.

(Heat treatment step)

This step is a step of heating a mixture, which has been discharged in the mixing step, so as to cause crosslinking reaction on a surface of the water-absorbing resin powder.

A device for performing the crosslinking reaction is not limited to any particular one, and can be preferably a paddle dryer. A reaction temperature in the crosslinking reaction is set as appropriate according to a type of the surface-crosslinking agent used, and is preferably 50°C to 300°C and more preferably 80°C to 200°C. From the viewpoint of the type and amount of the surface-crosslinking agent, water absorption performance of the water-absorbing resin, and the like, the reaction temperature is preferably 150°C or higher, more preferably 170°C or higher, and even more preferably 180°C or higher, and preferably 250°C or lower, and more preferably 230°C or lower. A heating time is preferably at least 5 minutes and more preferably at least 7 minutes.

(Cooling step)

This step is an optional step which is provided after the heat treatment step if needed. A device for carrying out the cooling is not limited to a particular one and is preferably a device whose specification is identical with that of a device used in the heat treatment step, and more preferably a paddle dryer. This is because such a device can be used as a cooling device by replacing a heating medium with a refrigerant. Note that, according to need, the water-absorbing resin particles obtained in the heat treatment step are forced to cool in the cooling step to a temperature of, for example, 30°C to 100°C, preferably of 40°C to 80°C, and more preferably of 50°C to 70°C.

[1-4-7] Sizing step

This step is a step of adjusting the particle size of a dried polymer or a (particulate) surface-crosslinked dried polymer. Carrying out the sizing step after the surface-crosslinking step makes it possible to obtain a water-absorbing resin powder or water-absorbing resin particles whose particle diameter or particle size distribution is highly controlled.

Preferably, the sizing step includes a pulverizing step and/or a classification step. More preferably, the sizing step includes a disintegration step and/or a classification step. The sizing step is preferably a step of obtaining, only through the pulverizing step or the disintegration step, a water-absorbing resin powder whose particle diameter and particle size distribution are controlled. The sizing step is ideally a step of obtaining, only through the disintegration step, a water-absorbing resin powder whose particle diameter and particle size distribution are controlled.

[1-4-8] Product filling step

A filling step is a step of filling a member for filling with a water-absorbing resin that has been produced through at least one of the above-described steps. In the present specification, the term "member for filling" is a member to be filed with a water-absorbing resin or water-absorbing agent that has been produced in the above-described manner. A water-absorbing resin or water-absorbing agent packed in the member for filling is, for example, shipped after having undergone a predetermined inspection. Note that a filling method in an embodiment of the present invention is suitably used in continuous production. The embodiment of the present invention achieves stabilization of absorption properties of products continuously obtained at a production scale of preferably 500 kg/h or more, even more preferably 1 ton/h or more, and particularly preferably 1.5 ton/h or more (upper limit is approximately 15 ton/h). Furthermore, with regard to the above-described water-absorbing resin or water-absorbing agent in which various additives are contained so that functionality is imparted to the above-described the water-absorbing resin or water-absorbing agent, strict control of an amount of the additives may be necessary. In such a case, the various properties of the water-absorbing resin or water-absorbing agent can be stably maintained by the method according to an embodiment of the present invention. Therefore, an embodiment of the present invention is suitably used as a method for packing a water-absorbing resin or a water-absorbing agent that contains a polyvalent metal salt, inorganic particles, or the like.

[1-4-9] Fine powder recovery step

This step is a step of recovering (recycling) fine powder, which has been removed in the classification step of the sizing step, by collecting the fine powder and supplying the fine powder to any of the above-described steps. In a production method in accordance with an embodiment of the present invention, the fine powder which has been collected in the sizing step is made into a granulated fine powder (and further, into a hydrogel granulated fine powder) in the above-described fine powder granulation step and then recovered in the drying step or a step prior to the drying step and further dried.

In the production method in accordance with an embodiment of the present invention, it is preferable to include, as a step which is not disclosed in Patent Literatures 17 and 18, a classification step after the drying step (including a second classification step after the surface-crosslinking step; hereinafter, the classification step includes the second classification step after the surface-crosslinking step). It is preferable that thereafter, after, in the classification step, the water-absorbing resin fine powder which had passed through a standard sieve having a mesh size of 150 pm is separated, the water-absorbing resin fine powder or the water-absorbing resin fine powder to which water has been added is recovered (reused) in a step prior to the drying step. In other words, the fine powder recovery step refers to the following step.
- A step of recycling, preferably in the polymerization step, the gel-crushing step, or the drying step, the water-absorbing resin fine powder that has been generated in the drying step, and the pulverizing and classification steps carried out according to need, by: separating the water-absorbing resin fine powder; and adding, in a step prior to the drying step, the water-absorbing resin fine powder as-is or hydrated or granulated. The water-absorbing resin powder, in particular, contains particles having a particle diameter of 150 pm or less in an amount of 70 mass% or more. The water-absorbing resin powder is hereinafter referred to also as "fine powder".

It is possible to control the particle size of the water-absorbing resin and improve the water absorption speed, by fine powder recovery, in particular, fine powder granulation, and additionally, fine powder granulation with water. Further, in a case where the re-dried material (b) is used simultaneously in the fine powder recovery step, regeneration of the re-dried material (b) which is better becomes possible.

A suitable fine powder recycling method in an embodiment of the present invention is a method in which, in an aqueous monomer solution before polymerization, in a hydrogel during polymerization, or in a dryer in the drying step, a fine powder of the water-absorbing resin, or a hydrate or granulated material hereof, inorganic fine particles if needed, and/or the like is/are mixed. Note that examples of a method for recycling fine powder in an aqueous monomer solution prior to polymerization are disclosed in International Publication Nos. WO 92/001008 and WO 92/020723. Further, examples of a method for recycling fine powder in a hydrogel during polymerization are disclosed in International Publication Nos. WO 2007/074167, WO 2009/109563, WO 2009/153196, and WO 2010/006937. Furthermore, examples of a method for recovering fine powder in the drying step (dryer) is disclosed in US Patent No. 6228930 and the like. These methods for recovering fine powder are preferably applied as a fine powder recycling method in an embodiment of the present invention.

In a case where the fine powder is recovered in a step prior to the drying step, the granulated fine powder is added to and mixed with, for example, an aqueous monomer solution before polymerization and/or a hydrogel during polymerization or gel-crushing. The amount of the granulated fine powder recovered in each step is adjusted as appropriate.

In a case where the granulated fine powder is mixed with a hydrogel, from the viewpoint of water absorption performance and productivity of a water-absorbing agent to be obtained, the amount of the granulated fine powder relative to the hydrogel is, on the solid content basis, preferably 30 mass% or less, more preferably 28 mass% or less, even more preferably 20 mass% or less, more preferably 15 mass% or less, and even more preferably 10 mass% or less, relative to the total mass in solid content of the hydrogel and the granulated fine powder. In a case where the granulated fine powder is added to the aqueous monomer solution, the amount of the granulated fine powder is preferably 30 mass% or less, more preferably 28 mass% or less, even more preferably 20 mass% or less, more preferably 15 mass% or less, and even more preferably 10 mass% or less, relative to the total mass in solid content of monomers and the granulated fine powder. After the hydrogel granulated fine powder is obtained within the above range, the hydrogel granulated fine powder is recovered in the drying step or a step prior to the drying step. After the recovery, the hydrogel granulated fine powder is dried together with the particulate hydrogel polymer in the polymerization step. As a result, the water-absorbing resin powder in accordance with an embodiment of the present invention can be obtained. Even in the case of the water-absorbing resin powder obtained at such a mixing ratio, a proportion (solid content ratio) of primary particles derived from the hydrogel and the water-absorbing resin granulated fine powder resulting from the fine powder recovery can be controlled as appropriate. The mixing ratio is preferably a ratio between the hydrogel and the granulated fine powder on the solid content basis.

In a form of addition, the granulated fine powder (particularly, a hydrogel granulated fine powder) may be added as-is in the above step, or may be added in a state in which the granulated fine powder is caused to be a swollen gel with a suitable amount of water. Unless the effect of the present invention is not hindered, then, it is possible to add, together with the granulated fine powder, water, a crosslinking agent, a binder other than water (e.g., a water-soluble polymer or a thermoplastic resin), a polymerization initiator, a reducing agent, a chelating agent, a coloration inhibitor, and/or the like. For example, in a case where water is added, it is preferable to add water in an amount of 1 mass% to 1000 mass% relative to the total mass in solid content of water and the granulated fine powder. In a case where another compound is added, it is preferable to add the compound in an amount of 0.01 mass% to 10 mass% relative to the total mass in solid content of water and the granulated fine powder.

When the granulated fine powder is added to the hydrogel, the granulated fine powder is at a temperature of preferably 50°C or higher and 100°C or lower, more preferably 55°C or higher, and even more preferably 60°C or higher, and more preferably 95°C or lower, and even more preferably 90°C or lower. Within such a temperature range, the effect of an adhesion control agent can be exerted more and the dried material can be prevented from becoming coarse.

[1-4-10] Other steps

An embodiment of the present invention may optionally include any other step other than the above steps. Examples of such a step include an additive addition step, a conveyance step between steps, a storage step, and an aging step.

(Additive addition step)

This step is a step of adding an additive(s) so as to impart various functions to a water-absorbing resin before, after or during surface-crosslinking, preferably a water-absorbing resin after surface-crosslinking. This step includes one or more steps.

It is possible to use, as the additive(s), at least one compound selected from the group consisting of liquid permeability improving agents, flowability improving agents in a moistened state, coloration inhibitors, powder flow control agents, polyvalent metal salts, cationic polymers, inorganic fine particles, chelating agents, reducing agents, hydroxycarboxylic acid compounds, surfactants, compounds each having a phosphorus atom, oxidizers, organic powders such as metallic soaps, deodorant agents, antibacterial agents, and aromatic substances such as terpene-based aromatic compounds and phenol-based aromatic compounds. Two or more kinds of these additives can be used in combination according to need.

The amount of the additive(s) added is set as appropriate depending on a selected compound(s). In the production process of the water-absorbing resin, for example, a coloration inhibitor (particularly, chelating agent and/or reducing agent) is added.

The additive may be added in an amount of preferably 0 parts by mass or more and more preferably more than 0 parts by mass, and preferably less than 1.2 parts by mass, more preferably less than 1.0 part by mass, and even more preferably less than 0.5 parts by mass, relative to the total mass of the additive and the water-absorbing resin before or during surface-crosslinking or preferably the water-absorbing resin after surface-crosslinking.

[1-4-11] Performance of unused produced water-absorbing resin or water-absorbing resin that is obtained by (conventional) production method in which monomer is used as raw material

A unused produced water-absorbing resin or a water-absorbing resin (containing no recycled water-absorbing resin) that has been obtained by a (conventional) production method in which a monomer is used as a raw material is referred to as "water-absorbing resin (X) as below.

Physical properties of the water-absorbing resin (X) are not particularly limited, provided that the water-absorbing resin (X) is put in general use. However, the water-absorbing resin (X) preferably satisfies the following physical properties.

The water-absorbing resin (X) preferably has an ACC (whose measuring method will be described later) of preferably 10 or more, more preferably 13 or more, even more preferably 16 or more, and most preferably 20 or more. In a case where the AAC is less than 10, the water-absorbing resin to be obtained may not have sufficient performance.

Regarding a particle size distribution of the water-absorbing resin (X), the water-absorbing resin (X) has a mass average particle diameter (D50) of preferably 300 pm or more and 600 pm or less, and a proportion of particles of less than 150 pm is 5 mass% or less. An upper limit of the mass average particle diameter (D50) is more preferably 500 pm, even more preferably 450 pm, and particularly preferably 400 pm. The proportion of the particles of less than 150 pm is more preferably 4 mass% or less, even more preferably 3 mass% or less, and particularly preferably 2 mass% or less. The logarithmic standard deviation ($\sigma\zeta$), which indicates narrowness of the particle size distribution, is preferably 0.20 or more, more preferably 0.25 or more, and even more preferably 0.27 or more, and preferably 0.50 or less, more preferably 0.40 or less, and even more preferably 0.35 or less. A smaller value of the logarithmic standard deviation ($\sigma\zeta$) of the particle size distribution advantageously leads to a more uniform particle size and less segregation of particles. It is preferable that the water-absorbing resin (X) satisfy each of the above mass average particle diameter (D50) and the above proportions of particles of less than 150 pm. It is more preferable that the water-absorbing resin (X) satisfy the mass average particle diameter (D50), each of the above-described proportions of particles of less than 150 pm, and the logarithmic standard deviation. It is possible to combine, as appropriate, respective values of the mass average particle diameter (D50), each of the proportions of particles having a diameter of less than 150 pm, and the logarithmic standard deviation in the preferable ranges.

The water-absorbing resin (X) having a particle diameter ranging from 850 pm to 150 pm accounts for preferably 70 weight% or more, more preferably 80 weight% or more, even more preferably 90 weight% or more, and most preferably 95 weight% or more.

The water-absorbing resin (X) preferably has a CRC of preferably 10 g/g to 70 g/g, more preferably 20 g/g to 60 g/g, and even more preferably 30 g/g to 50 g/g. The CRC of the water-absorbing resin (X) is higher than the CRC of the re-dried material (b) of the used water-absorbing resin described later.

(1-5) Method of mixing recycled water-absorbing resin in unused produced water-absorbing resin or in production process of water-absorbing resin in which monomer is used as raw material

The performance, in particular, water absorption performance of the recycled water-absorbing resin is recovered by the step of mixing the recycled water-absorbing resin in a production process of a water-absorbing resin in which a monomer is used as a raw material, and/or mixing the recycled water-absorbing resin in an unused produced water-absorbing resin.

It is preferable here that, in the second embodiment, the performance of a water-absorbing resin obtained in the production process of the water-absorbing resin be different from the performance of the re-dried material (b). The performance of the re-dried material (b) is preferably different from that of the unused water-absorbing resin. Recovery of the performance of the re-dried material (b) can be carried out simultaneously with production of the water-absorbing resin in the production process of the water-absorbing resin.

Examples of different performance in an embodiment of the present invention which are not disclosed in Patent Literature 5 include a different fluid retention capacity, a different soluble content, a different pH, a different neutralization rate, and a different particle size.

In the second embodiment, the performance of the re-dried material (b) of the used water-absorbing resin may differ from performance of the water-absorbing resin obtained in the production process of the water-absorbing resin and performance of the unused produced water-absorbing resin, and may be higher than the performances of those water-absorbing resins. When the recycled water-absorbing resin such as the re-dried material (b), whose performance is poor, is directly applied to the production process of the water-absorbing resin, the performance of the recycled water-absorbing resin is recovered. Note that examples of the above "poor performance" include a low fluid retention capacity, a low soluble content, a high soluble content, non-neutralness, fine grains and coarse grains. The term "non-neutralness" refers to, for example, a high pH or a low pH, or a high neutralization rate or a low neutralization rate.

In the second embodiment, it is possible to add, in the production process of the water-absorbing resin, the recycled water-absorbing resin optionally after the physical properties of the hydrogel of the used water-absorbing resin or a re-dried material thereof is separately recovered. However, in an embodiment of the present invention, the physical properties of the recycled water-absorbing resin whose performance is poor can be recovered by adding the recycled water-absorbing resin in the production process of the water-absorbing resin having different performance. Therefore, an embodiment of the present invention can be very simple.

In the second embodiment, the following re-dried material (b) which is not disclosed in Patent Literatures 5 to 7, 9, and 14 to 18 (particularly, Patent Literatures 17, 18, and 5) is used as an example having different performance.

For example, the fluid retention capacity (CRC) of the re-dried material (b) of the used water-absorbing resin is lower than that of the water-absorbing resin that is obtained in the production process of the water-absorbing resin and that of the unused produced water-absorbing resin. The fluid retention capacity (CRC) of the re-dried material (b) is 35 g/g or less. The CRC of the re-dried material (b) is preferably 30 g/g or less, 25 g/g or less, 20 g/g or less, 15 g/g or less, 10 g/g or less, 5 g/g or less, and preferably 3 g/g or less. Note that in the following descriptions, the "water-absorbing resin that is obtained in the production process of the water-absorbing resin and the used produced water-absorbing resin" may also be simply referred to as "water-absorbing resin obtained in the production process, and the like".

In a case where the re-dried material (b) having a low fluid retention capacity is added in a production process of a water-absorbing resin having different performance and/or to an unused produced water-absorbing resin, the CRC of the re-dried material (b) is recovered. Specifically, the CRC is improved and recovered by 10% or more, and further, 20% or more, relative to a theoretical CRC calculated on the basis of a weight ratio with the fluid retention capacity of the water-absorbing resin. Note that the theoretical CRC is expressed as (CRC of re-dried material $\times$ weight ratio + CRC of water-absorbing resin in production process $\times$ weight ratio).

The CRC of a water-absorbing resin or the like obtained in a production process is preferably a CRC of the water-absorbing resin (X) described earlier. The fluid retention capacity (CRC) of the re-dried material (b) differs from, for example, that of the water-absorbing resin or the like obtained in the production process, by preferably 1 g/g or more, 3 g/g or more, 5 g/g or more, 10 g/g or more, 15 g/g or more in the order of preference. Particularly, in a case where the fluid retention capacity of the re-dried material (b) is on a lower CRC side, the physical properties of the re-dried material (b) are recovered more.

In addition to being different in CRC, the re-dried material (b) of the used water-absorbing resin may be different in water-soluble content from, for example, the water-absorbing resin obtained in the production process. For example, in a case where the hydrogel of the used water-absorbing resin is subjected to a shrinking treatment, preferably, the water-soluble content (Extr) of the re-dried material (b) of the used water-absorbing resin is lower than the water-soluble content of the water-absorbing resin that is obtained in the production process of the water-absorbing resin. In this case, Extr is 20 weight% or less. The water-soluble content is preferably 15 weight% or less, 10 weight% or less, 5 weight% or less, 3 weight% or less, 1 weight% or less. Note that, for example, shrinkage treatments (A) and (B) of the above step (1) fall under the "case where the hydrogel of the used water-absorbing resin is subjected to a shrinking treatment".

The re-dried material (b) having such a low solubility content is added in a production process of a water-absorbing resin which has performance different from that of the re-dried material (b) or to an unused produced water-absorbing resin, the water content of the re-dried material (b) recovers. Specifically, the water-soluble content is improved by 10% or more, and further, 20% or more, relative to a theoretical water-soluble content calculated on the basis of a weight ratio with the fluid retention capacity of the water-absorbing resin. Note that the theoretical water-soluble content is expressed as (Extr of re-dried material $\times$ weight ratio + Extr of water-absorbing resin in production process $\times$ weight ratio).

The water-soluble content of the water-absorbing resin or the like that is obtained in the production process is selected within the following range. The water-soluble content of the re-dried material (b) differs from that of the water-absorbing resin or the like obtained in the production process, by preferably 1% or more, 2% or more, 3% or more, 5% or more, or 10%. Particularly, in a case where the water-soluble content of the re-dried material (b) is on a lower water-soluble content side, the physical properties of the re-dried material (b) are recovered more. Note that the range mentioned above is 1 weight% or more and 30 weight% or less.

The re-dried material (b) of the used water-absorbing resin has a more acidic or more basic pH or a lower neutralization rate or higher neutralization rate than the water-absorbing resin or the like that is obtained in the production process. The re-dried material (b) having a high neutralization rate is, for example, a re-dried material (b) having a neutralization rate of 80 mol% or more (90 mol% or more and 100 mol% or more). The re-dried material (b) having a low neutralization rate is, for example, a re-dried material (b) which has a neutralization rate of 60 mol% or less (50 mol% or less, 40 mol% or less, 30 mol% or less, 20 mol% or less, 10 mol% or less, or 0%). The re-dried material (b) having a high neutralization rate or a re-dried material (b) having a low neutralization rate is applied to a production process of a water-absorbing resin. As a result, the re-dried material which is acidic or basic or which has a low neutralization rate or a high neutralization rate is made to be a neutral water-absorbing resin. The production process of the water-absorbing resin refers to a production process of a water-absorbing resin having particularly a neutralization rate of 90% to 30%, and preferably 80% to 60%.

Further, the re-dried material (b) which has a low pH of 5.5 or less or which has a high pH of 6.5 or more is applied to a production process of a water-absorbing resin (particularly, in a production process of a water-absorbing resin which has a pH of particularly 5.5 to 6.5 and further, 5.7 to 6.3),so that the re-dried material (b) is made to be a neutral water-absorbing resin.

With regard to the particle size of the re-dried material (b) of the used water-absorbing resin, the re-dried material (b) is made of coarser grains or finer powder, and particularly finer powder than the water-absorbing resin or the like that is obtained in the production process. When the coarser grains or finer powder of the re-dried material (b) is applied to a production process of a water-absorbing resin (the production process of the water-absorbing resin having a particle diameter of the water-absorbing resin (X) described above), the re-dried material (b) becomes a water-absorbing resin having a desired particle size.

In the second embodiment of the present invention, the re-dried material (b) obtained through the above steps (1) to (3) is added in at least one of the steps (1') to (6') and another step(s) (7') below which are included in the production process of the water-absorbing resin.

In the first embodiment of the present invention, in a case where the recycled water-absorbing resin is added and mixed in a production process of a water-absorbing resin in which a monomer is used as a raw material, the recycled water-absorbing resin may be added and mixed during a step subsequent to the polymerization step in the production process. The step subsequent to the polymerization step is each of steps of gel-crushing, drying, pulverizing, classification, humidification, surface treatment, sizing, product filling, and fine powder recovery. The gel-crushing step is the same as a step (3') below, the drying step is the same as a step (4') below, the pulverizing and classification steps are steps (5') below, and the humidification step and the surface treatment step are the same as the steps (6') below.

In the second embodiment of the present invention, the re-dried material (b) (recycled water-absorbing resin) obtained through the above steps (1) to (3) may be added to at least one step selected from the group consisting of the steps (1') to (6') and another step(s) (7') included in the production process of the water-absorbing resin.

Among these steps (1') to (7'), from the viewpoint of recovery efficiency, it is preferable that the production process of the water-absorbing resin, in which the re-dried material (b) of the water-absorbing resin is added, further include the fine powder regeneration step of the water-absorbing resin (also called "fine powder recovery step" or "fine powder recycle step"). In particular, the re-dried material (b) of the used water-absorbing resin is added in the steps (1') to (5') below, and further in the fine powder recycle step (5'), and may be added in another step. Note that, in the second embodiment of the present invention, the fine powder recycle step (5') below may be carried out alone. Further, by recycling the fine powder in another step(s) such as the polymerization step (2') and/or the gel-crushing step (3'), the fine powder recycle step may be simultaneously carried out with such a step(s).

(1') Aqueous monomer solution preparation step
(2') Polymerization step
(3') Gel-crushing step during or after polymerization
(4') Drying step
(5') Particle size adjustment step subsequent to drying step, and fine powder regeneration step
(6') Additive addition step or surface-crosslinking step subsequent to particle size adjustment step.
(7') Other step(s)

(1-5-1) Addition of re-dried material (b) of used water-absorbing resin in aqueous monomer solution preparation step

In a preferred embodiment of the present invention, the re-dried material (b) of the used water-absorbing resin is added, as a third component, to an aqueous monomer solution. Then, during the polymerization step or a step subsequent to the polymerization step, in particular, the water absorption performance of the re-dried material (b) is recovered.

Note that it is possible to add the recycled water-absorbing resin other than the re-dried material (b) in the aqueous monomer solution preparation step. The recycled water-absorbing resin other than the re-dried material (b) is, for example, the recycled water-absorbing resin used in the first embodiment. Examples of the recycled water-absorbing resin include a water-absorbing resin which has been subjected to washing, dehydration, and/or the like by a known recycling method described earlier and which has a water-soluble content of 30 weight% or less. Note, however, that the timing of mixing the recycled water-absorbing resin used in the first embodiment in the production process of the water-absorbing resin is preferably a step subsequent to the polymerization step as described earlier.

In a case where the re-dried material (b) is added in the aqueous monomer solution preparation step, the re-dried material (b) is regenerated simultaneously with the polymerization step. Then, the aqueous monomer solution has an increased viscosity, and foaming polymerization can be accelerated in the next polymerization step. It is also possible to uniformly immobilize the re-dried material (b) inside the water-absorbing resin, and recover the water absorption performance of the re-dried material (b) which has deteriorated or disappeared.

The amount of the re-dried material (b) added relative to the aqueous monomer solution and the amount added in terms of solid content is the same as the amount of the third component added described above. Note that also in each of subsequent steps (1-5-2) to (1-5-8), the amount of the re-dried material (b) added (relative to solid content (%)) is the same as the amount of the third component added described earlier.

(1-5-2) Addition of third component, particularly, re-dried material (b) of used water-absorbing resin in polymerization step

In an embodiment of the present invention, in addition to the addition of the third component to the aqueous monomer solution described in [1-4-1], the third component other than the monomer and the crosslinking agent can be added in any step at a polymerization rate of 0% to 100% in the above "[1-4-2] Polymerization step".

In a preferred embodiment of the present invention, it is possible to add, as the third component, the re-dried material (b) to the aqueous monomer solution (at a polymerization rate of 0%) immediately before the start of a polymerization reaction, the aqueous monomer solution that is undergoing a polymerization reaction in a polymerization device, and/or a polymerized gel (at a polymerization rate of more than 0% and 100% or less). In a case where the re-dried material (b) is added to the aqueous monomer solution (at a polymerization rate of 0%) in the polymerization device, such addition does not substantially differ from addition of the re-dried material (b) in the monomer preparation step. The re-dried material (b) can be regenerated even when the re-dried material (b) is added to the aqueous monomer solution that is undergoing polymerization or to the polymerized gel (at a polymerization rate of more than 0% and 100% or less), and the re-dried material (b) can be uniformly immobilized inside the water-absorbing resin. Preferably, the re-dried material (b) is added to the polymerization device at a time point at which the polymerization rate is 50% or more, further 60% or more, or 70% or more.

Note that the recycled water-absorbing resin other than the re-dried material (b) can be added to the polymerization step. The recycled water-absorbing resin other than the re-dried material (b) is, for example, the above-described recycled water-absorbing resin used in the first embodiment. Note, however, that the timing of mixing the recycled water-absorbing resin used in the first embodiment in the production process of the water-absorbing resin is preferably a step subsequent to the polymerization step as described earlier.

(1-5-3) Addition of re-dried material (b) of used water-absorbing resin in hydrogel-crushing step

In addition to the addition of the third component in the monomer preparation step and the polymerization step, in an embodiment of the present invention, it is possible to add the third component, particularly the re-dried material (b) of the used water-absorbing resin, in the hydrogel-crushing step [1-4-3]. The amount of the re-dried material (b) added (relative to solid content(%)) is as described earlier.

(1-5-4) Addition of re-dried material (b) of used water-absorbing resin in drying step

In an embodiment of the present invention, it is possible to add the third component, particularly the re-dried material (b) of the used water-absorbing resin in the drying step [1-4-4]. The amount of the re-dried material (b) added (relative to solid content(%)) is as described earlier.

In the drying step or a step prior to the drying step, the re-dried material (b) of the used water-absorbing resin is added and dried at a high temperature, so that the re-dried material of the used water-absorbing resin can be immobilized in the water-absorbing resin and regenerated.

(1-5-5) Addition of re-dried material (b) in particle size adjustment step, fine powder recovery step, or granulation step subsequent to drying step

In the particle size adjustment step, pulverization and/or classification (the above [1-4-5]) of a dried polymer obtained in the drying step [1-4-4] can be applied. Pulverization and/or classification after drying can be carried out once or carried out again after surface-crosslinking, which will be described later. The fine powder that is generated in pulverization and/or classification may be granulated or recycled.

In the production process of these water-absorbing resins, preferably the re-dried material (b), and further, the fine powder or coarse grains of the re-dried material (b) are used. It is also preferable that the re-dried material (b) be regenerated to have the particle size of the water-absorbing resin (X) described in [1-4-10] simultaneously with production of the water-absorbing resin. The amount of the re-dried material (b) added (relative to solid content(%)) is as described earlier.

(1-5-6) Addition of re-dried material (b) of used water-absorbing resin in particle size adjustment step and fine powder recycle step

In addition to the addition of the third component in the above-described (1-5-1) to (1-5-5), in the second embodiment of the present invention, it is possible to add the re-dried material (b) of the used water-absorbing resin, in the particle size adjustment step and further, in the fine powder regeneration step (recovery step or fine powder granulation step). The amount of the re-dried material (b) added (relative to solid content(%)) is as described earlier.

In particular, in a case where the re-dried material (b) of the used water-absorbing resin is added together with the fine powder in the fine powder recovery step or the fine powder granulation step (which are not disclosed in, for example, Patent Literatures 17 and 18), the re-dried material (b) of the used water-absorbing resin can be uniformly immobilized inside the water-absorbing resin. This also makes it possible to recover the performance, in particular, water absorption performance of the re-dried material (b) of the used water-absorbing resin which has deteriorated or disappeared. In the production process of these water-absorbing resins, preferably the re-dried material (b), and further, the fine powder or coarse grains of the re-dried material (b) are used. It is also preferable that the re-dried material (b) be regenerated to have the particle size of the water-absorbing resin (X) described in [1-4-10] simultaneously with production of the water-absorbing resin.

A mass proportion of the unused fine powder and the re-dried material (b) of the used water-absorbing resin can be selected as appropriate from the ranges of 100:0 to 1:99, preferably 10:90 to 90:10.

Even in a case where the fine powder and the unused water-absorbing resin, which were conventionally unnecessary materials, are used in combination, the fine powder and the unused water-absorbing resin can be regenerated to be a water-absorbing resin that is more useful than respective water-absorbing resins obtained by separately regenerating the fine powder and the used water-absorbing resin. In this regard, adding the re-dried material (b) in the fine powder recycle step is particularly significant.

(1-5-7) Additive addition step or surface-crosslinking step subsequent to particle size adjustment step of water-absorbing resin, and addition of re-dried material (b) in additive addition step or surface-crosslinking step

In a preferred embodiment of the present invention, it is possible to add the re-dried material (b) of the used water-absorbing resin in the surface-crosslinking step (1-4-6) other than the above-described addition of the third component in (1-5-1) to (1-5-6). The amount of the re-dried material (b) added (relative to solid content(%)) is as described earlier.

(1-5-8) Addition of re-dried material (b) to another step(s)

In a preferred embodiment of the present invention, it is possible to add the re-dried material (b) in another step(s), particularly in the additive addition step, in addition to the above-described addition of the third component in (1-5-1) to (1-5-7).

In the first embodiment of the present invention, in addition to a case where the above-described recycled water-absorbing resin is added or mixed in a production process of a water-absorbing resin in which a monomer is used as a raw material, the recycled water-absorbing resin may be added to or mixed with an unused produced water-absorbing resin (water-absorbing agent or water-absorbing resin product). Note that the "above-described recycled water-absorbing resin" refers to, for example, the re-dried material (b), or the recycled water-absorbing resin which has been subjected to washing, dehydration, and/or the like by the above-described known recycle method and in which the water-soluble content is 30 weight% or less.

The recycled water-absorbing resin is preferably added or mixed in a step after the polymerization step and before the surface treatment step. The recycled water-absorbing resin may also be mixed in the product filling step or mixed with an unused produced water-absorbing resin (water-absorbing agent, or water-absorbing resin product). It is also preferable that the recycled water-absorbing resin be mixed with an unused produced water-absorbing resin.

Another aspect is a method in which a recycled resin is mixed in a production process of a water-absorbing resin in which a monomer is used as a raw material, and further the recycled resin is mixed also in a water-absorbing resin product (product which has been produced but not yet shipped) which has been obtained in the production process.

When the recycled water-absorbing resin is mixed in, a mixing ratio of the recycled water-absorbing resin is 1 weight% or more and less than 100 weight%, preferably 1 weight% to 90 weight%, more preferably 1 weight% to 70 weight%, even more preferably 1 weight% to 50 weight%, yet even more preferably 1 weight% to 30 weight%, and most preferably 1 weight% to 10 weight% relative to the total amount of the water-absorbing resin after the mixing.

Examples of a method of mixing the recycled water-absorbing resin include: a method in which the recycled water-absorbing resin is added as it is; a method in which the recycled water-absorbing resin is added in a swollen gel state in which the recycled water-absorbing resin is swollen with water, and a method in which the recycled water-absorbing resin is added in a state in which the recycled water-absorbing resin is dispersed in water. From the viewpoint of cost, it is preferable, as the method of mixing the recycled water-absorbing resin, to add the recycled water-absorbing resin as it is.

In a case where the recycled water-absorbing resin is mixed in the "gel-crushing step", the recycled water-absorbing resin may be added before or during crushing. Further, the recycled water-absorbing resin may be split into portions and introduced separately. From the viewpoint of uniformity of a gel component, it is preferable to mix the recycled water-absorbing resin before the gel-crushing.

In a case where the recycled water-absorbing resin is mixed in the "drying step", the hydrogel and the recycled water-absorbing resin may be mixed together before drying, or may be dried intentionally without mixing. In a case where a powder of the recycled water-absorbing resin and the hydrogel are mixed with each other before drying, moisture of the hydrogel is transferred to the powder of the recycled water-absorbing resin. As a result, effects such as increase of the drying rate and avoidance of generation of undried gel can be expected. Therefore, it is preferable to mix, before drying, the powder of the recycled water-absorbing resin and the hydrogel with each other.

In a case where the recycled water-absorbing resin is mixed in the pulverizing and classification steps, the recycled water-absorbing resin may be mixed in any of the steps before or after pulverization or before or after classification. Further, the recycled water-absorbing resin may be split into portions and mixed in each step. From the viewpoint of reduction of adhesion to pulverizing and classification apparatuses, it is preferable to use the recycled water-absorbing resin in a powder form and handle the recycled water-absorbing resin in a powder form.

In a case where the recycled water-absorbing resin is mixed in the "surface-crosslinking step", the dried material of the water-absorbing resin and the recycled water-absorbing resin are mixed with each other before the surface-crosslinking agent is mixed, and then the surface-crosslinking agent may be added and a surface-crosslinking treatment may be carried out. Alternatively, the dried material of the water-absorbing resin and the recycled water-absorbing resin, which have not been mixed with each other in advance, may be separately mixed with the surface-crosslinking agent, and then, mixed with each other. Thereafter, a surface-crosslinking treatment may be carried out. A step in which mixing is carried out is not limited to the above step, but may be carried out during the heat treatment step and/or the cooling step. From the viewpoint of uniform mixability of the surface treatment liquid and the water-absorbing resin, it is preferable to use the recycled water-absorbing resin in a powder form and handle the recycled water-absorbing resin as-is in a powder form.

In a case where the recycled water-absorbing resin is mixed in the "sizing step", the recycled water-absorbing resin may be mixed before sizing, or may be mixed during sizing with use of, for example, a classification device for use in sizing, or may be mixed after sizing. From the viewpoint of reducing coarse particles and fine powder mixed in the water-absorbing resin after the mixing, it is preferable to mix the water-absorbing resin before sizing.

In a case where the recycled water-absorbing resin is mixed in the "product filling step", it is preferable to fill a product after the recycled water-absorbing resin is mixed, from the viewpoint of uniformity of a filled product. However, embodiments of the present invention are not particularly limited to this arrangement. Further, from the viewpoint of uniform mixability with the water-absorbing resin before mixing, the recycled water-absorbing resin is preferably handled in a powder form. In a case where the recycled water-absorbing resin is mixed in the "product filling step", it is preferable that, for example, removal of a foreign substance and adjustment of the particle size distribution (especially, for example, removal of coarse particles) is carried out in advance on the recycled water-absorbing resin.

In a case where the recycled water-absorbing resin is mixed in the "fine powder recovery step", from the viewpoint of uniform mixability, it is preferable that after the recycled water-absorbing resin is mixed with the fine powder collected, a known fine powder recovery step be carried out, and the recovered fine powder is recycled in the drying step or a step prior to the drying step. However, embodiments of the present invention are not particularly limited to this arrangement. Further, it is preferable that the recycled water-absorbing resin be handled in a powder form. In a case where the recycled water-absorbing resin is mixed in the "fine powder recovery step", it is preferable that the recycled water-absorbing resin is also in a form of powder (particles having a particle diameter of 150 pm or less account for preferably 70 weight% or more, more preferably 80 weight% or more, and most preferably 90 weight% or more).

(1-6) Step of re-separating constituent material other than water-absorbing resin from water-absorbing resin obtained in production process of water-absorbing resin

In the second embodiment, the water-absorbing resin which has been obtained by adding the re-dried material (b) in the above (1-5-1) to (1-5-8) further includes, as a third separation step, preferably a step (4) of re-separating the constituent material other than the water-absorbing resin from the water-absorbing resin which has been obtained in a production process of a water-absorbing resin. In the step (4), a method similar to that of the above-described step (3) of re-separation can be applied. One or more selected from the group consisting of sieve classification, airflow classification, metal removal by means of magnetic force line, and color selection can be applied.

Note that the step (4) can be applied also to the first embodiment according to need.

(1-7) Physical properties of water-absorbing resin after mixing

(1) Absorption in Actual Conditions of use (AAC)

"AAC" refers to an absorbing ability that assumes more practical performance as a hygienic material, and indicates an absorption capacity measured under the following conditions.

Measurement conditions

Basis weight of water-absorbing resin: 177 g/m$^2$
Loading condition: 4.8 kPa
Absorption time: 2 hrs
Absorbed liquid: 0.9 weight% aqueous sodium chloride solution

The following description will discuss a device and a method for measuring AAC.
A 400-mesh metal gauze (having a mesh size of 38 pm) made of stainless steel was fused to a bottom of a plastic supporting cylinder having an inner diameter of 60 mm. Then, 0.500 g (177 g/m$^3$) of a water-absorbing resin composition was evenly dispersed on the metal gauze under conditions of room temperature (20°C to 25°C) and a humidity of 50 RH%. Further, on the water-absorbing resin, a piston and a main weight were placed in this order. The piston had an outer diameter that was slightly smaller than 60 mm, and in which no gap was produced with the supporting cylinder and up and down movements were not hindered. Then, a weight Wa (g) of this measuring device set (A) was measured. The piston is adjusted so as to be capable of evenly applying a load of 4.8 kPa to the water-absorbing resin.
A glass filter (manufactured by Sogo Laboratory Glass Works Co., Ltd., fine pore diameter: 100 pm to 120 pm) having a diameter of 90 mm was placed in a petri dish having a diameter of 150 mm. Then, a 0.90 weight% aqueous sodium chloride solution (20°C to 25°C) was added so as to be at the same level as an upper surface of the glass filter. On the aqueous sodium chloride solution and the glass filter, a sheet of filter paper having a diameter of 90 mm (available from Advantec Toyo Kaisha, Ltd., product name: JIS P 3801 No. 2, with a thickness of 0.26 mm and a retaining particle diameter of 5 pm) was placed in such a manner that the entire surface of the sheet of filter paper was wet. Further, excess liquid was removed.
The measuring device set (A) was placed on the filter paper moistened, and the liquid was absorbed under load. Then, the liquid was added as needed so that the liquid surface of the 0.9 weight% aqueous sodium chloride solution remained at the same level as the upper surface of the glass filter, while the water-absorbing agent was swollen. After 2 hours, the measuring device set (A) was lifted up and the weight Wb (g) of the measuring device set (A) was measured. Then, from Wa and Wb, the AAC (g/g) was calculated according to the following formula.

$$\mathrm{AAC\ (g/g)\ =\ (Wb\ (g)\ -\ Wa\ (g))/0.500\ g}$$

Note that unit (g/g) of the AAC may be omitted.
The AAC of a water-absorbing resin obtained by a production method in accordance with an embodiment of the present invention and/or a water-absorbing agent that contains the water-absorbing resin obtained by the production method is preferably 10 or more, more preferably 13 or more, even more preferably 16 or more, and most preferably 20 or more (21 or more, 22 or more, or 23 or more). In a case where the AAC is less than 10, the water-absorbing resin to be obtained may not have sufficient performance.

(2) Performance Recovery Index (PRI)

"PRI" refers to an index indicating to what extent AAC performance of a mixture with a recycled water-absorbing resin has been recovered in a comparison with an unused produced water-absorbing resin prior to mixing with the recycled water-absorbing resin. In a case where a mixed water-absorbing resin (water-absorbing agent) ($\gamma$) obtained by mixing an unused produced water-absorbing resin ($\alpha$) with which the recycled water-absorbing resin has not been mixed and a recycled water-absorbing resin ($\beta$) is obtained, the PRI is calculated by the following calculation formula.

AAC of unused produced water-absorbing resin ($\alpha$) prior to mixing = AAC - $\alpha$

AAC of water-absorbing resin (γ) after mixing (mixed product) = AAC - γ

$$PRI = AAC - γ/AAC - α * 100$$

Note that unit of the PRI is dimensionless.

The PRI of a water-absorbing resin (and a water-absorbing agent that contains the water-absorbing resin) obtained by the production method in accordance with an embodiment of the present invention is preferably 70 or more, more preferably 80 or more, even more preferably 90 or more, yet even more preferably 95 or more, and most preferably 100 or more. In a case where the PRI is less than 70, the water-absorbing resin or water-absorbing agent to be obtained may not have sufficient performance.

(2) Method for producing water-absorbing resin

An embodiment of the present invention also provides a method for producing a water-absorbing resin, the method including the method for regenerating a used water-absorbing resin.

(3) Water-absorbing resin in accordance with embodiment of present invention

A water-absorbing resin which has been obtained by the above regeneration method (method for producing a water-absorbing resin in accordance with an embodiment of the present invention) is a water-absorbing resin which contains a recycled material of a used water-absorbing resin and which scarcely contains constituent material of the used hygienic material other than the used water-absorbing resin. The water-absorbing resin is also excellent in powder flowability and coloration.

A cause of deterioration in performance in the case of using a conventional regeneration method was examined. As a result, it was found as a fact that a constituent material of a used hygienic material other than a used water-absorbing resin causes an adverse effect beyond a range that can be expected from an amount of the constituent material contained. For example, in the case of nonwoven fabric, when nonwoven fabric is heated during a regeneration process, the water-absorbing resin melts and adheres and this causes deterioration in handleability and reduction in fluid retention capacity. In the case of pulp, pulp causes a decrease in bulk density of the water-absorbing resin, deterioration in powder flowability, coloration, and/or swelling restriction that results in a decrease in fluid retention capacity.

In order to solve the problem, an embodiment of the present invention is, for example, the regeneration method in accordance with an embodiment of the present invention, and provides a water-absorbing resin which contains a regenerated product of a used water-absorbing resin and in which the constituent material of the used hygienic material other than the used water-absorbing resin is contained in an amount of 1 weight%, and further, 0.5 weight% or less, or 0.1 weight% or less.

In order to solve the problem, an embodiment of the present invention includes, for example, the regeneration method in accordance with an embodiment of the present invention, and involves a granulated fine powder which contains a regenerated product of a used water-absorbing resin and a fine powder of an unused water-absorbing resin.

A water-absorbing resin in accordance with an embodiment of the present invention does not contain one or more polymer decomposition agent selected from the group consisting of an oxidizer and a reducing agent, or, in a case where the polymer decomposition agent is contained, contains the polymer decomposition agent in an amount of 100 ppm or less. The polymer decomposition agent is at least one selected from the group consisting of an L-ascorbic acid (salt), a (hydrogen) sulfite, a chlorite, a hypochlorite, and hydrogen peroxide.

In the water-absorbing resin in accordance with an embodiment of the present invention, it is preferable that the mass ratio between the solid content of the regenerated product of the used water-absorbing resin and the solid content of monomers constituting the water-absorbing resin is 0.01 to 50:99.99 to 50.

The water-absorbing resin in accordance with an embodiment of the present invention has a centrifuge retention capacity (CRC) of preferably 10 g/g or more, more preferably 20 g/g or more, even more preferably of 25 g/g or more, and particularly preferably 30 g/g or more. The upper limit of the centrifuge retention capacity (CRC) is not particularly limited, and is preferably 50 g/g, more preferably 45 g/g, and even more preferably 40 g/g, from the viewpoint of balance with other physical properties.

The water-absorbing resin in accordance with an embodiment of the present invention has a water-soluble content (Extr) of preferably 50 weight% or less, 40 weight% or less, 30 weight% or less, 20 weight% or less, 15 weight% or less, or 10 weight% or less in this order.

In the production process of these water-absorbing resins, the re-dried material (b) having physical properties different from those of the water-absorbing resins is used. It is also preferable that performance of the re-dried material (b) is recovered to the performance of the water-absorbing resin simultaneously with the production of the water-absorbing resin. Note that in the production process of the water-absorbing resin, it is also possible to use a recycled water-absorbing resin other than the re-dried material (b). The recycled water-absorbing resin other than the re-dried material (b) is, for example, the above-described recycled water-absorbing resin used in the first embodiment.

(4) Application etc. of water-absorbing resin in accordance with embodiment of present invention

The water-absorbing resin in accordance with an embodiment of the present invention can be widely used in absorbent articles, and can be used in, for example, sanitary materials, cables, packing materials, soil additives, or construction materials.

(5) Difference from conventional techniques

As described above, in a method for regenerating a constituent member (particularly a water-absorbing resin) of a disposable hygienic material, an embodiment of the present invention applies, to a production process of a water-absorbing resin having performance different from that of a re-dried material of a used water-absorbing resin, the re-dried material having been obtained by removing a constituent member other than the water-absorbing resin. The timing of applying the re-dried material is before and/or after drying the hydrogel of the used water-absorbing resin.

The re-dried material is preferably the above-described specific re-dried material (b). The production process is preferably a specific step described in the above (1-5-1) to (1-5-8).

For example, in Patent Literatures 5, 6, 7, 9, 14 to 18, a method for regenerating a used water-absorbing resin is proposed. Among those Patent Literatures, in Patent Literatures 17, 18, and 5, a solubilized product or acid-treated product of the used water-absorbing resin is applied to a production process of the water-absorbing resin. However, in an embodiment of the present invention, the step (3) is further introduced, as a novel regeneration method which is not disclosed in Patent Literatures 17 and 18. The step (3) is a step of re-separating the constituent material other than the water-absorbing resin from the re-dried material (a) of the used water-absorbing resin which has been dried by heating. This improves the performance of the re-dried material (b) which is obtained in the step (3) and which has been added in the production process of the water-absorbing resin.

Furthermore, in the regeneration method of Patent Literature 5, "acid treatment (shrinkage), oxidizer treatment (sterilization/deodorization/decolorization), drying, and foreign substance separation" of the water-absorbing resin are disclosed for a raw material for producing a highly-water-absorbing polymer, and a detection limit of a producer bacteria at a mineral content of 35% or less is disclosed. Patent Literature 5 is a technique that reduces the mineral content and the general producer bacteria without attention to the performance of a regenerated water-absorbing resin and of a water-absorbing resin in a production process. In contrast, an embodiment of the present invention is featured by not only the step (3) but also the step of adding, in the production process of a water-absorbing resin having performance different from that of the re-dried material (b), the re-dried material (b) of the used water-absorbing resin which has been subjected to re-separation. Therefore, it is possible to provide a method for regenerating a used water-absorbing resin, which is superior in cost and performance to those of Patent Literatures 5, 6, 7, 9, 14 to 18. More preferably, an embodiment of the present invention provides a method for regenerating a used water-absorbing resin, which is excellent in cost and performance, by applying the above re-dried material (b) preferably to a specific step(s) described in the above (1-5-1) to (1-5-8).

(6. Summary)

The present invention includes the following aspects:

< 1 > A method for producing a water-absorbing resin, the method including the steps of: mixing a recycled water-absorbing resin in a production process of a water-absorbing resin in which a monomer is used as a raw material; and/or mixing the recycled water-absorbing resin with an unused produced water-absorbing resin, the recycled water-absorbing resin having a water-soluble content of 30 weight% or less.

< 2 > The method according to < 1 >, wherein in a case of the step of mixing the recycled water-absorbing resin in the production process of a water-absorbing resin in which a monomer is used as a raw material, the recycled water-absorbing resin is mixed in a step subsequent to a polymerization step in the production process.

<3> The method according to < 1 > or <2>, wherein the recycled water-absorbing resin has an absorption capacity without load of 3 g/g or more.

<4> The method according to any one of < 1 > to <3>, wherein the recycled water-absorbing resin is obtained by a method including the following steps (1) to (3):

a step (1) in which a hydrogel of a used water-absorbing resin contained in a used hygienic material is shrunk and obtained as a shrunk hydrogel, and the shrunk hydrogel is separated from a constituent material other than the used water-absorbing resin in the used hygienic material;

a step (2) in which the shrunk hydrogel having been obtained in the step (1) is dried by heating, and a re-dried material (a) of the used water-absorbing resin is obtained; and

a step (3) in which from the re-dried material (a) of the used water-absorbing resin having been obtained in the step (2), a re-dried material (b) of the used water-absorbing resin is obtained so as to be used as the recycled water-absorbing resin, by re-separating the constituent material other than the used water-absorbing resin in the used hygienic material.

<5> The method according to any one of < 1 > to <4>, wherein the recycled water-absorbing resin has a water-soluble content of 15 weight% or less.

<6> The method according to any one of < 1 > to <5>, wherein the recycled water-absorbing resin contains 80 weight% or more of particles ranging from 850 pm to 150 pm.

<7> The method according to any one of < 1 > to <6>, wherein the recycled water-absorbing resin has a moisture content of 30 weight% or less.

<8> The method according to any one of claims 1 to 7, wherein the recycled water-absorbing resin has an initial color tone (YI value) of 35 or less.

<9> The method according to any one of < 1 > to <8>, wherein an amount of residual urea in the recycled water-absorbing resin is 2 weight% or less.

< 10> The method according to any one of <1> to <9>, wherein an amount of residual monomers in the recycled water-absorbing resin is 500 ppm or less.

< 11> The method according to any one of <1> to < 10>, wherein the recycled water-absorbing resin has a content of contraries of 5 $mm^2$ / 100 g or less.

< 12> The method according to any one of <1> to < 11>, wherein the recycled water-absorbing resin has a bulk density of 0.3 or more and 0.9 or less.

< 13 > The method according to any one of < 1 > to < 12>, wherein the unused produced water-absorbing resin or the water-absorbing resin in which a monomer is a raw material has an AAC of 10 or more.

< 14> The method according to any one of < 1> to < 13>, wherein the recycled water-absorbing resin has a fluid retention capacity (CRC) lower than that of the water-absorbing resin obtained by a method for producing a water-absorbing resin in which a monomer is a raw material and/or that of the unused produced water-absorbing resin, and the fluid retention capacity (CRC) is 35 g/g or lower.

< 15> The method according to any one of < 1> to < 14>, wherein the recycled water-absorbing resin has a water-soluble content lower than that of the water-absorbing resin obtained by a method for producing a water-absorbing resin in which a monomer is a raw material and/or that of the unused produced water-absorbing resin, and the water-soluble content is 20 weight% or lower.

< 16> The method according to any one of < 1> to < 15>, wherein the recycled water-absorbing resin has a more acidic or more basic pH or a higher or lower neutralization rate than the water-absorbing resin that is obtained by a method for producing a water-absorbing resin in which a monomer is a raw material and/or the unused produced water-absorbing resin.

< 17> The method according to any one of < 4 > to < 16>, wherein in the step (3) or separately, the re-dried material (a) is pulverized to a particle diameter of 1 mm or less, and the re-dried material (a) after pulverization or the recycled water-absorbing resin has a particle diameter of 1 mm or less.

< 18> The method according to any one of <1> to < 17>, wherein the step of mixing the recycled water-absorbing resin in the production process of a water-absorbing resin in which a monomer is used as a raw material includes a fine powder recycle step; and

the fine powder recycle step is a step of mixing a fine powder of an unused water-absorbing resin in the production process of a water-absorbing resin in which a monomer is used as a raw material.

< 19> The method according to claim 18, wherein the recycled water-absorbing resin is added in the fine powder recycle step.

<20> The method according to any one of <4> to < 19>, wherein in the step (1), the hydrogel of the used water-absorbing resin in the used hygienic material is shrunk with use of a polyvalent metal ion.

<21> The method according to any one of <4> to <20>, wherein in the step (1), the hydrogel of the used water-absorbing resin in the used hygienic material is solubilized in a solvent with use of an oxidizer or a reducing agent.

<22> The method according to any one of < 1 > to <21>, wherein a mass ratio between a solid content of the recycled water-absorbing resin and a solid content of the monomer is 0.01 to 50:99.99 to 50.

<23> The method according to any one of <4> to <22>, wherein in the step (3), from the re-dried material (a) of the used water-absorbing resin, the constituent material other than the used water-absorbing resin in the used hygienic material is re-separated by one or more methods selected from the group consisting of sieve classification, airflow classification, metal removal by means of magnetic force line, and color selection.

<24> The method according to any one of <4> to <23>, wherein the hydrogel of the used water-absorbing resin in the used hygienic material or a dried material thereof has a yellowness index (YI) of 20 or less.

<25> The method according to any one of <4> to <24>, wherein: the hydrogel of the used water-absorbing resin in the used hygienic material has an oxidizer or a reducing agent or an oxidizer or a reducing agent is used in the step (2); and a total amount of the oxidizer and the reducing agent which the recycled water-absorbing resin has is 1000 ppm or less.

<26> The method according to any one of < 1 > to <25>, wherein a coloration inhibitor is added in at least one step of the production process of the water-absorbing resin in which a monomer is used as a raw material.

<27> A water-absorbing agent containing a water-absorbing resin obtained by the method according to any one of < 1 > to <26>.

<28> The water-absorbing agent according to <27>, wherein PRI expressed by the following formula is 70 or more:

$$PRI = AAC - \gamma / AAC - \alpha * 100$$

AAC - $\alpha$: AAC of an unused produced water-absorbing resin ($\alpha$) prior to mixing the recycled water-absorbing resin, and

AAC - $\gamma$: AAC of a mixed water-absorbing resin ($\gamma$).

<29> A water absorbent article containing the water-absorbing agent according to <27> or <28>.

<30> A water-absorbing resin including a regenerated product of a used water-absorbing resin which has been contained in a used hygienic material, and containing, in an amount of 1 weight% or less, a constituent material other than the used water-absorbing resin which has been contained in the used hygienic material.

<31> The water-absorbing resin according to <30>, further including a regenerated product of a fine powder of an unused water-absorbing resin.

The present invention also includes the following aspects:

< 1 > A method for regenerating a used water-absorbing resin in a used hygienic material, the method including:

a step (1) of separating, from the used hygienic material, a hydrogel of the used water-absorbing resin having undergone a shrinking treatment or a solubilizing treatment and a constituent material of the used hygienic material other than the used water-absorbing resin;

a step (2) of drying by heating the hydrogel of the used water-absorbing resin separated;

a step (3) of re-separating the constituent material other than the used water-absorbing resin from a re-dried material (a) of the used water-absorbing resin which has been dried by heating; and

a step (4) of adding a re-dried material (b) of the used water-absorbing resin which has been re-separated, in a production process of a water-absorbing resin having performance different from that of the re-dried material (b).

<2> The method according to < 1>, wherein the re-dried material (b) of the used water-absorbing resin has a fluid retention capacity (CRC) lower than that of the water-absorbing resin to be obtained by the production process of the water-absorbing resin, and the fluid retention capacity (CRC) is 35 g/g or less.

<3> The method according to < 1 > or <2>, wherein the re-dried material (b) of the used water-absorbing resin has a soluble content lower than the water-absorbing resin to be obtained by the production process of the water-absorbing resin, and the soluble content is 30 weight% or less.

<4> The method according to any one of < 1 > to <3>, wherein the re-dried material (b) of the used water-absorbing resin has a more acidic or more basic pH or a lower or higher neutralization rate than the water-absorbing resin in the production process of the water-absorbing resin.

<5> The method according to any one of < 1 > to <4>, wherein: the re-dried material is pulverized to a particle diameter of 1 mm or less simultaneously with or separately from the step (2) of drying by heating; and the re-dried material (a) or (b) pulverized has a particle diameter of 1 mm or less.

<6> The method according to any one of < 1 > to <5>, wherein the production process of the water-absorbing resin in which the re-dried material (b) of the used water-absorbing resin is added includes a fine powder recycle step for the unused water-absorbing resin.

<7> The method according to any one of < 1 > to <6>, wherein the re-dried material (b) of the used water-absorbing resin is added in a fine powder recycle step.

<8> The method according to any one of < 1 > to <6>, wherein the shrinking treatment of the hydrogel of the used water-absorbing resin is shrinking with use of a polyvalent metal ion.

<9> The method according to any one of < 1> to <6>, wherein the solubilizing treatment of the hydrogel of the used water-absorbing resin is carried out with use of an oxidizer or a reducing agent.

< 10> The method according to any one of < 1 > to <9>, wherein a mass ratio between a solid content of the re-dried material (b) of the used water-absorbing resin and a solid content of a monomer used in the production process of the water-absorbing resin is 0.01 to 50:99.99 to 50.

< 11 > The method according to any one of < 1 > to <10>, wherein in the step (3) of re-separating the constituent material other than the used water-absorbing resin is at least one selected from the group consisting of sieve classification, airflow classification, metal removal by means of magnetic force line, and color selection.

< 12> The method according to any one of < 1> to < 11>, in which the hydrogel of the used water-absorbing resin or a dried material thereof has a yellowness index (YI) of 20 or less.

< 13 > The method according to any one of <1> to <12>, wherein: the hydrogel of the water-absorbing resin in the used hygienic material contains an oxidizer or a reducing agent or an oxidizer or a reducing agent is used in the step (1) of separating the constituent material; and a total amount of the oxidizer and the reducing agent in the re-dried material (b) added in the production process of the water-absorbing resin is 1000 ppm or less.

< 14 > The method according to any one of <1> to <13>, wherein in at least one step of the production process of the water-absorbing resin, a coloration inhibitor is added.

< 15 > A method for producing a water-absorbing resin, the method including the method according to any one of < 1 > to < 14 >.

< 16> A water-absorbing resin which contains a regenerated product of a used water-absorbing resin and in a constituent material of a used hygienic material other than the used water-absorbing resin is 1 weight% or less.

< 17> The water-absorbing resin according to <16>, further including a recycled fine powder of an unused water-absorbing resin.

The present invention is not limited to the embodiments, but can be altered by a skilled person in the art within the scope of the claims. The present invention also encompasses, in its technical scope, any embodiment derived by combining technical means disclosed in differing embodiments.

Examples

Embodiments of the present invention will be described in more detail with use of the following Examples and Comparative Examples. However, the technical scope of the present invention is not limited to only the following Examples. In Examples below, operations were carried out at room temperature (20°C to 25°C)/relative humidity of 45%RH to 55%RH, unless otherwise specified.

Note that electric devices/apparatuses (including devices/apparatuses used to measure physical properties of a particulate water-absorbing agent) used in Examples, Comparative Examples, and Reference Examples each used a 200-V or 100-V electric power supply, unless otherwise specified.

[Water-Absorbing Resin Production Example 1]

As a method for producing a water-absorbing resin, a well-known method can be employed as appropriate. The following describes conditions created as an example.

The following were introduced and mixed: 421.99 g of acrylic acid, 1.07 g (0.035 mol% relative to carboxyl-group-containing unsaturated monomers) of polyethylene glycol diacrylate (molecular weight: 523) as an internal crosslinking agent, 0.86 g of a 3.0 weight% aqueous trisodium diethylenetriamine pentaacetate (DTPA·3Na) solution, 173.87 g of a 48.5 weight% aqueous sodium hydroxide solution, and 406.97 g of deionized water (ion-exchange water). As a result, an aqueous monomer solution (a') was prepared.

Next, to the aqueous monomer solution (a') at a temperature of 41°C, 178.70 g of a 48.5 weight% aqueous sodium hydroxide solution at 40°C was added and mixed with each other, so that an aqueous monomer solution (a) was prepared. At this time, the temperature of the aqueous monomer solution (a) was increased to 80°C by heat of neutralization at s second step immediately after preparation.

Next, 16.53 g of a 4.5 weight% aqueous sodium persulfate solution was added to the aqueous monomer solution (a) while the aqueous monomer solution (a) was being stirred. Immediately after that, a resulting solution was poured into a stainless steel vat-type vessel.

A polymerization reaction started after the aqueous monomer solution (a) was poured into the vat-type vessel. After a 3-minute period from the start of the polymerization reaction, a crosslinked hydrogel polymer (hereafter referred to as "hydrogel") (1) was taken out.

The hydrogel (1) thus obtained in the polymerization reaction was cut into a strip shape, supplied to a screw extruder and gel-crushed, so that a particulate hydrogel (1) was obtained.

The particulate hydrogel (1) was spread out on a metal gauze and subjected to hot air drying at 190°C for 30 minutes. A resulting dried material was pulverized with use of a roll mill, so that a water-absorbing resin precursor (A) ground to have an uneven shape and having a weight average particle diameter (D50) of 380 pm was obtained. The water-absorbing resin precursor (A) had a centrifuge retention capacity (CRC) of 46.1 (g/g).

With 100 parts by weight of the water-absorbing resin precursor (A), a surface-crosslinking agent solution consisting of 0.025 parts by weight of ethyleneglycoldiglycidyl ether, 0.3 parts by weight of ethylene carbonate, 0.5 parts by weight of propylene glycol, and 2.0 parts by weight of deionized water was uniformly mixed. Then, a resultant mixture was heat-treated at 190°C for approximately 30 minutes so that a resultant water-absorbing resin (V-1) would have a CRC of approximately 35 [g/g]. Then, the mixture was cooled, and with 100 parts by weight of a resulting water-absorbing resin, an aqueous solution consisting of 1 part by weight of deionized water and 0.005 parts by weight of trisodium diethylenetriamine pentaacetate (DTPA·3Na) was mixed uniformly. A resultant mixture was dried at 60°C for 1 hour, and then sieved through a JIS standard sieve having a mesh size of 850 pm, so that the water-absorbing resin (V-1) was obtained. The water-absorbing resin (V-1) had a CRC of 34.0 g/g and an AAC of 26.5 g/g.

[Water-Absorbing Resin Regeneration Example 1]

A regenerated (recycled) water-absorbing resin was obtained by the following method.

Into a beaker, 20 g of the water-absorbing resin (V-1) was put. Further, after 600 g of human urine was added to the beaker, the beaker was left to stand for 12 hours. As a result, a used water-absorbing resin was prepared.

Into the beaker, 1800 g of ion-exchange water was added and a water-washing operation was carried out by stirring for 15 minutes. Next, contents of the beaker were filtered through a 100-mesh metal gauze made of stainless steel, and then, a residue (water-absorbing resin remaining on the metal gauze) was put back in the beaker. Further, into the beaker, 1800 g of new ion-exchange water was added and a second water-washing operation was carried out by stirring for 15 minutes. Next, contents of the beaker were filtered through a 100-mesh metal gauze made of stainless steel, and then, a residue was put back in the beaker. Into the beaker, 2800 g of 95% ethanol was added and a dehydration operation was carried out by stirring for 15 minutes. Next, contents of the beaker were filtered through a 100-mesh metal gauze made of stainless steel, and then, a residue was dried for 3 hours in an oven at 180°C. Subsequently, a resultant dried material was pulverized with use of a vibrating mill. Thus obtained was a recycled water-absorbing resin (R-1) ground to have an uneven shape which had passed through a sieve of a mesh size of 850 pm but remained on a sieve of a mesh size of 106 pm. The recycled water-absorbing resin (R-1) had a soluble content of 6.8 weight%, an amount of residual urea of 0.6 weight%, and a CRC of 39.0 g/g.

[Water-Absorbing Resin Regeneration Example 2]

A regenerated (recycled) water-absorbing resin was obtained by the following method.

Into a beaker, 20 g of the water-absorbing resin (V-1) was put. Further, after 600 g of human urine was added to the beaker, the beaker was left to stand for 12 hours. As a result, a used water-absorbing resin was prepared.

Into the beaker, the used water-absorbing resin was put, and further, 2800 g of 95% ethanol was added. Then, a dehydration operation was carried out by stirring for 15 minutes. Next, contents of the beaker were filtered through a 100-mesh metal gauze made of stainless steel, and then, a residue was dried for 3 hours in an oven at 180°C. Subsequently, a resultant dried material was pulverized with use of a vibrating mill. Thus obtained was a recycled water-absorbing resin (R-2) ground to have an uneven shape which had passed through a sieve of a mesh size of 850 pm but remained on a sieve of a mesh size of 106 pm. The recycled water-absorbing resin (R-2) had a soluble content of 30.5 weight%, an amount of residual urea of 3.3 weight%, and a CRC of 37.6 g/g.

[Water-Absorbing Resin Regeneration Example 3]

A regenerated (recycled) water-absorbing resin was obtained by the following method.

Into a beaker, 20 g of the water-absorbing resin (V-1) was put. Further, after 600 g of human urine was added to the beaker, the beaker was left to stand for 12 hours. As a result, a used water-absorbing resin was prepared.

Into the beaker, 1800 g of ion-exchange water was added and a water-washing operation was carried out by stirring for 15 minutes. Next, contents of the beaker were filtered through a 100-mesh metal gauze made of stainless steel, and then, a residue (water-absorbing resin remaining on the metal gauze) was put back in the beaker. Into the beaker, 2800 g of 95% ethanol was added and a dehydration operation was carried out by stirring for 15 minutes. Next, contents of the beaker were filtered through a 100-mesh metal gauze made of stainless steel, and then, a residue was dried for 3 hours in an oven at 180°C. Subsequently, a resultant dried material was pulverized with use of a vibrating mill. Thus obtained was a recycled water-absorbing resin (R-3) ground to have an uneven shape which had passed through a sieve of a mesh size of 850 pm but remained on a sieve of a mesh size of 106 pm. The recycled water-absorbing resin (R-3) had a soluble content of 14.8 weight%, an amount of residual urea of 1.5 weight%, and a CRC of 39.8 g/g.

[Water-Absorbing Resin Regeneration Example 4]

The recycled water-absorbing resin (R-3) was sieved through a sieve having a mesh size of 150 pm, and a recycled water-absorbing resin (R-4) ground to have an uneven shape which remained on the sieve having a mesh size of 150 pm was obtained. The recycled water-absorbing resin (R-4) thus obtained had a soluble content of 6.5 weight% and an amount of residual urea of 0.6 weight%.

The recycled water-absorbing resin (R-4) was sieved with use of JIS standard sieves having respective mesh sizes of 850 pm, 500 pm, 300 pm, 150 pm, and 106 pm. As a result, it was found that a particulate portion ranging from 850 pm to 150 pm accounted for 98.8 weight% of all the water-absorbing resin, and had a CRC of 39.1 g/g.

(Examples 1 to 7 and Comparative Example 1)

The water-absorbing resin (V-1) and one of the recycled water-absorbing resins (R-1) to (R-4) were mixed with each other at the following ratios.

Example 1: 90 parts by weight of the water-absorbing resin (V-1) and 10 parts by weight of the recycled water-absorbing resin (R-1). Example 2: 70 parts by weight of the water-absorbing resin (V-1) and 30 parts by weight of the recycled water-absorbing resin (R-1). Example 3: 50 parts by weight of the water-absorbing resin (V-1) and 50 parts by weight of the recycled water-absorbing resin (R-1). Example 4: 30 parts by weight of the water-absorbing resin (V-1) and 70 parts by weight of the recycled water-absorbing resin (R-1). Example 5: 10 parts by weight of the water-absorbing resin (V-1) and 90 parts by weight of the recycled water-absorbing resin (R-1). Example 6: 10 parts by weight of the water-absorbing resin (V-1) and 90 parts by weight of the recycled water-absorbing resin (R-3). Example 7: 10 parts by weight of the water-absorbing resin (V-1) and 90 parts by weight of the recycled water-absorbing resin (R-4).

Comparative Example 1: 10 parts by weight of the water-absorbing resin (V-1) and 90 parts by weight of the recycled water-absorbing resin (R-2).

Table 1 shows the AAC and the performance recovery index (PRI) of each of resultant mixtures (water-absorbing agent).

(Example 8) Water-Absorbing Resin Production Example in which recycled water-absorbing resin was mixed in gel-crushing step

A polymer hydrogel (1) which was obtained as in Water-Absorbing Resin Production Example 1 and cut into a strip shape and the recycled water-absorbing resin (R-1) which was obtained in Water-Absorbing Resin Regeneration Example 1 were put in a polyethylene bag so that the weight ratio in solid content was 9:1, and were mixed well with each other. As a result, a polymer hydrogel/recycled water-absorbing resin mixture (1) was obtained.

The polymer hydrogel/recycled water-absorbing resin mixture (1) was subjected to treatments such as gel-crushing, hot air drying, and surface-crosslinking as in Water-Absorbing Resin Production Example 1. As a result, a water-absorbing resin (V-2, water-absorbing agent) having a weight average particle diameter (D50) of 386 pm was obtained.

The water-absorbing resin (V-2) had a CRC of 34.0 g/g and an AAC of 26.5 g/g. The water-absorbing resin (V-2) had a PRI of 100% relative to the water-absorbing resin (V-1).

(Example 9) Water-Absorbing Resin Production Example in which recycled water-absorbing resin was mixed in fine powder recovery step

The polymer hydrogel (1) obtained as in Water-Absorbing Resin Production Example 1 was spread out on a metal gauze and subjected to hot air drying at 190°C for 30 minutes. A resulting dried material was pulverized with use of a roll mill and classified with use of a JIS standard sieve having a mesh size of 106 pm. Then, particles having passed through that 106-pm sieve was collected, so that the water-absorbing resin fine powder (1') was obtained.

Further, a pulverized material obtained by pulverizing, with a vibrating mill, the dried material obtained as in Water-Absorbing Resin Regeneration Example 1 was classified with use of a JIS standard sieve having a mesh size of 106 pm. Then, particles having passed through the sieve having a mesh size of 106 pm was collected, so that a recycled water-absorbing resin fine powder (R-1') was obtained. The recycled water-absorbing resin fine powder (R-1') thus obtained had a soluble content of 8.2 weight% and an amount of residual urea of 0.5 weight%.

Next, 10 parts by weight of the water-absorbing resin fine powder (1') and 90 parts by weight of the recycled water-absorbing resin fine powder (R-1') were mixed well. Then, with a resultant mixture, 100 parts by weight of hot water at 80°C to 90°C was mixed while stirring was being carried out. As a result, a fine powder granulated gel (1) having a particle diameter of 1 mm to 3 mm (solid content concentration: approximately 50 weight%) was obtained.

Separately, the polymer hydrogel (1) obtained as in Water-Absorbing Resin Production Example 1 and the fine powder granulated gel (1) were mixed with each other so that the weight ratio in solid content was 10:3, and hot air drying at 190°C for 30 minutes was carried out. Subsequently, a resultant dried material was pulverized with use of a roll mill and subjected to classification with use of JIS standard sieves having respective mesh sizes of 850 pm to 106 pm. As a result, a water-absorbing resin precursor (B) ground to have an uneven shape having a weight average particle diameter (D50) of 384 pm was obtained. The water-absorbing resin precursor (B) had a centrifuge retention capacity (CRC) of 47.2 (g/g).

With 100 parts by weight of the water-absorbing resin precursor (B), a surface-crosslinking agent solution consisting of 0.025 parts by weight of ethyleneglycoldiglycidyl ether, 0.3 parts by weight of ethylene carbonate, 0.5 parts by weight of propylene glycol, and 2.0 parts by weight of deionized water was uniformly mixed. Then, a resultant mixture was heat-treated at 190°C for approximately 30 minutes so that a resultant water-absorbing resin (V-3) would have a CRC of approximately 35 [g/g]. Thereafter, the mixture was cooled, and, with 100 parts by weight of a resulting water-absorbing resin, an aqueous solution consisting of 1 part by weight of deionized water and 0.005 parts by weight of trisodium diethylenetriamine pentaacetate (DTPA·3Na) was mixed uniformly. A resultant mixture was dried at 60°C for 1 hour, and then sieved through a JIS standard sieve having a mesh size of 850 pm, so that the water-absorbing resin (V-3, water-absorbing agent) was obtained. The water-absorbing resin (V-3) had a CRC of 34.5 g/g and an AAC of 26.2 g/g. The water-absorbing resin (V-3) also had a PRI of 99% relative to the water-absorbing resin (V-1).

[Table 1]

| | Unused water-absorbing resin (a) | Re cycle d water-absorbing resin (β) | Soluble content in re cycle d water-absorbing resin (weight%) | Amount of residual urea in re cycle d water-absorbing resin (weight%) | Mixing ratio α:β | AAC of mixed product water-absorbing agent (γ) (g/g) | Pe rformance Recovery Index (PRI) |
|---|---|---|---|---|---|---|---|
| Example 1 | V-1 | R-1 | 6.8 | 0.6 | 9:1 | 27.3 | 103 |
| Example 2 | V-1 | R-1 | 6.8 | 0.6 | 7:3 | 27.6 | 104 |
| Example 3 | V-1 | R-1 | 6.8 | 0.6 | 5:5 | 26.7 | 101 |
| Example 4 | V-1 | R-1 | 6.8 | 0.6 | 3:7 | 26.0 | 98 |
| Example 5 | V-1 | R-1 | 6.8 | 0.6 | 1:9 | 24.8 | 94 |
| Example 6 | V-1 | R-3 | 14.8 | 1.5 | 1:9 | 23.6 | 89 |
| Example 7 | V-1 | R-4 | 6.5 | 0.6 | 1:9 | 25.0 | 94 |
| Comparative Example 1 | V-1 | R-2 | 30.5 | 3.3 | 1:9 | 7.2 | 27 |
| (Water-Absorbing Body Examples 1 to 9 and Water-Absorbing Body Comparative Example 1) | | | | | | | |

In the following procedure, water-absorbing bodies (simple water absorbent articles) were prepared with use of the water-absorbing agents obtained above.

Two 1.6 g pulp sheets of 80 mm × 160 mm were prepared from fluff pulp (common pulp used in paper diapers). Next, from a water-absorbing sheet (common sheet used in paper diapers), a 200 mm × 200 mm piece was cut out, and a frame of 8 cm × 16 cm was placed in an approximate center of the piece of the water-absorbing sheet. One of the pulp sheets which had been adjusted to 1.6 g was spread in the frame, and an upper surface of the pulp sheet was made to be even with use of an acrylic plate or the like. Then, 3.2 g of a water-absorbing agent was evenly dispersed from the direction of the upper surface. Then, 1.6 g of the pulp sheet was further placed, so that a sandwich structure was produced. The absorbent body thus prepared was retained for one minute in a state in which a load of 10 kg was applied throughout the absorbent body, and thus the absorbent body was molded. Thereafter, the load and the frame were removed and both end portions of the water-absorbing sheets were folded back along a longitudinal direction of the absorbent body so that the absorbent body was enfolded. A resultant product was placed in a nonwoven fabric bag (10 cm × 22 cm) which had been prepared with use of Heatron paper, and a periphery of the nonwoven fabric bag was heat-sealed. A model absorbent body was thus obtained. Into this model absorbent body, 30 ml of a 0.9 weight% aqueous sodium chloride solution was introduced from a center portion of the model absorbent body three times at an interval of 30 minutes. After 30 minutes from third introduction of the solution, texture of the water-absorbing body was evaluated by three levels as follows: excellent; good; and poor. Table 2 shows results of this evaluation.

[Table 2]

|  | Texture evaluation result |
|---|---|
| Water-Absorbing Body Example 1 | excellent |
| Water-Absorbing Body Example 2 | excellent |
| Water-Absorbing Body Example 3 | excellent |
| Water-Absorbing Body Example 4 | good |
| Water-Absorbing Body Example 5 | good |
| Water-Absorbing Body Example 6 | good |
| Water-Absorbing Body Example 7 | good |
| Water-Absorbing Body Example 8 | excellent |
| Water-Absorbing Body Example 9 | excellent |
| Water-Absorbing Body Comparative Example 1 | poor |

The water-absorbing agents used in Water-Absorbing Body Examples 1 to 9 and Water-Absorbing Body Comparative Example 1 were respective water-absorbing agents that were obtained in Examples 1 to 9 and Comparative Example 1.

The physical properties described in Examples below were calculated at room temperature ($23\pm2$°C) and at a humidity of $50\pm10$ RH%.

(Reference Example 1) Production of water-absorbing resin

An aqueous sodium acrylate solution which contained 0.05 mol% (relative to monomers) of polyethylene glycol diacrylate (average number of ethylene oxide units: n = 9) as a crosslinking agent and which had a concentration of 40 mass% at a neutralization rate of 72 mol% was prepared (aqueous monomer solution preparation step). Next, to the aqueous sodium acrylate solution obtained, 0.12 g of sodium persulfate per mol of monomers was added. Then, the monomers were subjected to aqueous solution polymerization, so that a crosslinked hydrogel polymer (1) was obtained (polymerization step). Next, the crosslinked hydrogel polymer (1) was cut to several centimeters at 60°C, and then further grain-refined to 5 mm or less with use of a meat chopper, so that a particulate crosslinked hydrogel polymer (1) was obtained (gel-crushing step). The particulate crosslinked hydrogel polymer (1) was disposed to form a layer having a thickness of several centimeters, dried by a hot air dryer at an air temperature of 180°C for 20 minutes, and then dried to a solid content of 95%. In this way, a block-shaped dried polymer (1) was obtained (drying step). The block-shaped dried polymer (1) was pulverized with use of a roll mill and further classified with use of JIS standard sieves having respective mesh sizes of 850 pm and 150 pm. Fine powder of less than 150 pm (approximately 10 mass% relative to the total amount of the block-shaped dried polymer (1)) was collected. Further, particles of more than 850 pm were re-pulverized with use of a roll mill. Thus, a water-absorbing resin powder (A) measuring 850 pm to 150 pm and a water-absorbing resin fine powder (B) measuring less than 150 pm were obtained (particle size adjustment step).

To the 850-pm to 150-pm water-absorbing resin powder (A) thus obtained, an aqueous surface-crosslinking agent solution consisting of 2 mass% of water and 0.6 mass% of ethylene carbonate, which served as a surface-crosslinking agent, was added by spraying in a Loedige mixer. Thereafter, a resultant mixture was subjected to a heat treatment at 190°C for 20 minutes. The water-absorbing resin powder (A) after the heat treatment was sized with use of JIS standard sieves having respective mesh sizes of 850 pm and 150 pm, so that a surface-crosslinked water-absorbing resin powder (1) was obtained (surface-crosslinking step). Resultant particles (fine powder having a particle diameter of less than 150 pm) having passed through the sieve having an open mesh of 150 pm here were used as a surface-crosslinked water-absorbing resin fine powder (b).

(Reference Example 2) Fine powder granulation of water-absorbing resin

With 100 parts by mass of the water-absorbing resin fine powder (B) of less than 150 pm which had been obtained in Reference Example 1, 100 parts by mass of hot water at a temperature of 80°C to 90°C was mixed while stirring was being carried out. In this way, a fine powder granulated gel (solid content rate: approximately 50 weight%) having a particle diameter of 1 mm to 3 mm was obtained. Thereafter, the fine powder granulated gel thus obtained was dried by heating for 30 minutes with use of a hot air dryer at 180°C. The fine powder granulated gel after drying had been granulated to a particle diameter of 1 mm to 3 mm, and was further pulverized with a roll mill and classified with use of JIS standard sieves having respective mesh sizes of 850 pm and 150 pm. Thus, a granulated fine powder (1) having a particle diameter of 850 pm to 150 pm was obtained (fine powder granulation step). The granulated fine powder (1) had a fluid retention capacity CRC of 27.9 g/g.

(Reference Example 3) Separation/recovery of water-absorbing resin from paper diaper (shrinking treatment with polyvalent metal salt)

First, 200 g of a 0.9 weight% saline solution (model artificial urine) was poured into a commercially available paper diaper, and a resultant paper diaper was used as a model for the used water absorbent article. Note that the fluid retention capacity (CRC) of the water-absorbing resin used in the paper diaper was 35 g/g, and the content of the water-absorbing resin was approximately 10 g per diaper. The content of the water-absorbing resin as a water-absorbing member relative to a total amount of pulp and the water-absorbing resin was approximately 50 weight%.
Next, the following operation was carried out as a "step (1) of separating, from a hygienic material, a hydrogel of the used water-absorbing resin and constituent materials of the hygienic material other than the water-absorbing resin". That is, the model was further cut into several centimeters. Thereafter, a large excess of water was added to a cut material and stirred, so that an aqueous dispersion liquid containing pulp, nonwoven fabric, a thermoplastic binder, and swollen gel particles of the water-absorbing resin was obtained. Next, calcium chloride was added to the aqueous dispersion liquid in order to separate the swollen gel particles from the water and sediment the swollen gel particles. Thus, the swollen gel particles of the water-absorbing resin (a partially neutralized sodium polyacrylate crosslinked body) were shrunk to 1 mm or less and sedimented. Then, the pulp, the nonwoven fabric, and the thermoplastic binder floating in the water were separated according to difference in specific gravity. Thereafter, the swollen gel particles which had shrunk with calcium chloride and sedimented and the pulp were further filtered through a metal gauze, so that the swollen gel particles were separated as a shrunk material (1).
Next, as a "step (2) of drying by heating the hydrogel of the used water-absorbing resin which had been separated from the hygienic material", the shrunk material (1) was dried at 150°C for 40 minutes. Further, the shrunk material (1) dried was finely pulverized to a particle diameter of 300 pm or less, so that a re-dried material (1a) (having a moisture content of 4% (drying loss at 180°C for 3 hours)) of the used water-absorbing resin was obtained.
Further, the pulp and a trace amount of nonwoven fabric were removed from the re-dried material (1a) with use of a JIS standard sieve having a mesh size of 300 pm, as a "step (3) of additionally re-separating constituent materials of the hygienic material other than the water-absorbing resin from the re-dried material (1a) of the used water-absorbing resin which had been dried by heating". Thus, a re-dried material (1b) (having a fluid retention capacity CRC of 1.0 g/g, and a soluble content of 1 weight%) of the used water-absorbing resin was obtained, in which the content of the constituent materials of the hygienic material other than the water-absorbing resin was 1 weight% or less. Note that the polymer decomposition agent was not used. Therefore, the polymer decomposition agent contained in the re-dried material (1b) was zero.

(Example 10) Addition of re-dried material (1b) in fine powder recycle step

The re-dried material (1b) (water-absorbing resin crosslinked with calcium chloride, which had a CRC of 1.0 g/g and a soluble content of 1%) obtained from the paper diaper in Reference Example 3 was further classified with use of a JIS standard sieve having a mesh size of 150 pm, so that particles having passed through that 150-pm sieve were obtained. The particles having passed through the 150-pm sieve had a CRC of 1.0 g/g.
Next, as addition, in a production process of a water-absorbing resin having different performance, of the re-dried material (1b) obtained from the paper diaper in Reference Example 3, addition of Reference Example 3 in a fine powder recycle step (addition in the production process of CRC = 27.9 g/g according to Reference Example 2) was carried out.
Specifically, as in fine powder granulation in Reference Example 2, 100 parts by mass of hot water at 80°C to 90°C was mixed with a mixture of 90 parts by mass of the water-absorbing resin fine powder (B) of less than 150 pm and 10 parts by mass of particles of the re-dried material (1b) (CRC = 1.0 g/g) having passed through the sieve having a mesh size of 150 pm, while stirring was being carried out. Thus, a fine powder granulated gel (solid content rate: approximately 50%) was obtained and then dried. A fine powder granulated gel dried material after drying had been granulated to have a particle diameter of several millimeters as in Reference Example 2. The fine powder granulated gel dried material was further pulverized with a roll mill and classified with use of JIS standard sieves having respective mesh sizes of 850 pm and 150 pm. Thus, a granulated fine powder (2) having a particle diameter of 850 pm to 150 pm was obtained (hereinafter, water-absorbing resin (1)) (fine powder granulation step).

The water-absorbing resin (1) containing 10 mass% of the particles (CRC = 1.0 g/g) of the re-dried material (1b) having passed through a sieve having a mesh size of 150 pm had a fluid retention capacity CRC of 27.3 g/g.

The granulated fine powder (1) here had a CRC of 27.9 g/g, and particles of the re-dried material (1b) having passed through the sieve having a mesh size of 150 pm had a CRC 1.0 g/g. The granulated fine powder (1) and the re-dried material (1b) differ from each other in CRC by 26.9 g/g and thus have different performances. In other words, the production process of the granulated fine powder (1) and the production process of the re-dried material (1b) are steps of producing respective water-absorbing resins having different performances.

In Example 10, a theoretical CRC of the water-absorbing resin (1), which was calculated from a mixing ratio of 9:1 of the water-absorbing resin fine powder (B) and the particles of the re-dried material (1b) having passed through the sieve having an open mesh of 150 pm is 25.2 g/g (= 27.9 × 0.9 + 1.0 × 0.1). In contrast, an actually measured CRC of the water-absorbing resin (1) was 27.3 g/g. In other words, it was confirmed that the fluid retention capacity improved by 2.1 g/g relative to the theoretical CRC. In other words, this improvement resulting from application of the re-dried material (1b) in the production process of the water-absorbing resin which had a greatly different performance from the re-dried material (1b) is equivalent to a significant recovery of the CRC of the re-dried material (1b) from 1.0 g/g to 21.9 g/g.

(Comparative Example 2) Addition of re-dried material (1a) in fine powder granulation step

A used water-absorbing resin was regenerated as in Example 10 except that the re-dried material (1b) of the used water-absorbing resin of Reference Example 3 was replaced in Example 10 by the re-dried material (1a) of Reference Example 3. A comparative water-absorbing resin thus obtained had a lower YI and a lower fluid retention capacity CRC, which was lower by approximately 1 g/g to 2 g/g, than those of the water-absorbing resin (1) obtained in Example 10, and further had inferior powder properties to those of the water-absorbing resin (1).

(Comparative Example 3) Addition of shrunk dried material (1) in fine powder granulation step

A used water-absorbing resin was regenerated as in Example 10 except that the re-dried material (1b) of the used water-absorbing resin of Reference Example 3 was replaced in Example 10 by a separated shrunken material (1) of Reference Example 3. A comparative water-absorbing resin thus obtained had a lower YI and a lower fluid retention capacity, which was lower by approximately 1 g/g to 2 g/g, than those of the water-absorbing resin (1) obtained in Example 10, and further had inferior powder properties to those of the water-absorbing resin (1).

(Comparative Example 4) Conventional regeneration treatment

The shrunk material (1) of the used water-absorbing resin of Reference Example 3 (CRC after drying at 150°C for 50 minutes was 1.0 g/g) was subjected to a CRC recovery step by removing calcium chloride in accordance with Japanese Patent Application Publication Tokukai No. 2013-198862 and was then dried. However, the CRC of the shrunk material (1) recovered only by approximately 1 g/g to 2 g/g.

(Example 11) Change in amount of re-dried material (b) added in Example 10

In the addition of the re-dried material (1b) in the fine powder granulation step of Example 10, the mixing ratio of a fine powder mixture obtained by mixing the water-absorbing resin fine powder (B) and the water-absorbing resin fine powder (b) and the particles of the re-dried material (1b) having passed through a sieve having an open mesh of 150 pm was changed from 90:10 to 80:20. Note that the water-absorbing resin fine powder (B) had a particle diameter of less than 150 pm, and that the water-absorbing resin fine powder (b) had a particle diameter of less than 150 pm and was surface-crosslinked.

In other words, the amount of the mixture of the water-absorbing resin fine powder (B) of less than 150 pm and the surface-crosslinked water-absorbing resin fine powder (b) of less than 150 pm was changed to 80 parts by mass, and the amount of the particles of the re-dried material (1b) obtained from the paper diaper in Reference Example 3 which have passed through the sieve having an open mesh of 150 pm was changed to 20 parts by mass. Except for this point, fine powder granulation was carried out as in Example 10. In this way, a granulated fine powder (3) (hereinafter, water-absorbing resin (2)) was obtained.

The water-absorbing resin (2) containing 20 mass% of the re-dried material (1a) (CRC = 1.0 g/g) had a CRC of 24.3 g/g.

In Example 11, a theoretical CRC of the water-absorbing resin (2), which was calculated from a mixing ratio of 8:2 of a fine powder mixture of the water-absorbing resin fine powder (B) and the water-absorbing resin fine powder (b) and the particles of the re-dried material (1b) having passed through the sieve having an open mesh of 150 pm is 22.5 g/g (= 27.9 × 0.8 + 1.0 × 0.2). In contrast, the water-absorbing resin (2) actually measured had a CRC of 24.3 g/g, so that it was confirmed that the fluid retention capacity CRC improved by 1.6 g/g relative to the theoretical CRC. This is equivalent to a significant recovery of the CRC of the re-dried material (1b) from 1.0 g/g to 9.9 g/g.

(Example 12) Addition of re-dried material (1b) in polymerization step

In the polymerization step of the water-absorbing resin of Reference Example 1, 5 mass% [relative to (re-dried material (1b) + monomer solid component)] of the re-dried material (1b) (CRC = 1.0 g/g; particles having passed through the JIS standard sieve having a mesh size of 150 pm) was added to the aqueous monomer solution, and then polymerization was carried out.

Thereafter, a water-absorbing resin powder (2), which had been crosslinked and which had undergone sizing with use of JIS standard sieves having respective mesh sizes of 850 pm and 150 pm, was obtained (hereinafter, a water-absorbing resin (3)), by carrying out gel-crushing, drying, particle size adjustment, and surface-crosslinking as in Reference Example 1.

In the water-absorbing resin (3) obtained by adding the re-dried material (1b) in the polymerization step, all the re-dried material (1b) (150 pm or less) was incorporated inside particles. Further, as in Example 10 (addition in the fine powder recycle step), the fluid retention capacity CRC recovered in Example 12 (addition in the polymerization step). Furthermore, no residual material of the re-dried material (1b) (particles having passed through the 150-pm sieve) was present in the water-absorbing resin (3).

(Example 13) Addition of re-dried material (1b) in gel-crushing step

In the gel-crushing step of the water-absorbing resin of Reference Example 1, 5 mass% [relative to the re-dried material (1b) + monomer solid component) of the re-dried material (1) (CRC = 1.0 g/g) was added to the crosslinked hydrogel polymer, and then gel-crushing was carried out. Thereafter, a water-absorbing resin powder (3), which had been crosslinked and which had undergone sizing with use of JIS standard sieves having respective mesh sizes of 850 pm and 150 pm, was obtained (hereinafter, a water-absorbing resin (4)) by carrying out drying, particle size adjustment, and surface-crosslinking as in Reference Example 1. In the water-absorbing resin (4) obtained by adding the re-dried material (1b) in the gel-crushing step, all the re-dried material (1b) (150 pm or less) was incorporated inside particles. Further, as in Example 10 (addition in the fine powder recycle step), the fluid retention capacity CRC also recovered in Example 13 (addition in the gel-crushing step). Furthermore, no residual material of the re-dried material (1b) (particles having passed through the 150-pm sieve) was present.

(Conclusion on Examples 10 to 13 and Comparative Examples 2 to 4)

A recovery method was carried out in which: the hydrogel of the used water-absorbing resin was re-dried after separation; thereafter, re-separation from the re-dried material was also carried out; and the re-dried material (b) obtained was added in a production process of a water-absorbing resin having different performance at a rate of usage of 10 mass% or 20 mass% relative to the water-absorbing resin. It is clear from a comparison between Examples 10 and 11 and Comparative Examples 2 to 4 that the fluid retention capacity (CRC) improves more than a theoretical value that is calculated from the mixing ratio without use of any costly additive (an organic acid or an agent for removing the organic acid). That is, it is clear that the water absorption performance of the used hydrogel is recovered.

It is also clear that it is possible to avoid deterioration of the fluid retention capacity (CRC) and/or powder properties which would result from recycling of the used water-absorbing resin by operations without a complex operation, which include recovery of a material shrunk with use of calcium in Examples 10 and 11.

Further, from a comparison between Example 10 and Comparative Examples 2 and 3, it is found that CRC reduction rates (%) of Comparative Examples 2 and 3 are significantly higher than a CRC reduction rate which is assumed from a trace amount (%) of constituents, such as pulp, other than the water-absorbing resin, which were removed in the step (3) of Example 10. It can be inferred from this that the constituents in trace amount such as pulp was causing deterioration in performance due to crosslinking or chain transfer in a production process. Therefore, importance of the steps (2) and (3) in the second embodiment of the present invention can be understood.

It is clear from Examples 12 and 13 that, also in each of steps of a production process of another water-absorbing resin, the re-dried material (b) can be used as a raw material for the water-absorbing resin.

It is also clear that, in a case where a polymer decomposition agent and a metal component in the re-dried material (b) added in a production process of a water-absorbing resin are present in a certain amount or less or ND (undetectable), the re-dried material (b) can be stably recovered.

Industrial Applicability

It is possible to provide a method for producing a water-absorbing resin which is useful for reducing resources and energy consumption, and which is based on, for example, the viewpoint of reduction in burden on global environment, protection of resources, carbon neutral, and SDGs (Sustainable Development Goals).

**Claims**

1.  A method for producing a water-absorbing resin, the method comprising the steps of:

    mixing a recycled water-absorbing resin in a production process of a water-absorbing resin in which a monomer is used as a raw material; and/or
    mixing the recycled water-absorbing resin with an unused produced water-absorbing resin,
    the recycled water-absorbing resin having a water-soluble content of 30 weight% or less.

2.  The method according to claim 1, wherein in a case of said step of mixing the recycled water-absorbing resin in the production process of a water-absorbing resin in which a monomer is used as a raw material, the recycled water-absorbing resin is mixed in a step subsequent to a polymerization step in the production process.

3.  The method according to claim 1 or 2, wherein the recycled water-absorbing resin has an absorption capacity without load of 3 g/g or more.

4.  The method according to any one of claims 1 to 3, wherein the recycled water-absorbing resin is obtained by a method including the following steps (1) to (3):

    a step (1) in which a hydrogel of a used water-absorbing resin contained in a used hygienic material is shrunk and obtained as a shrunk hydrogel, and the shrunk hydrogel is separated from a constituent material other than the used water-absorbing resin in the used hygienic material;
    a step (2) in which the shrunk hydrogel having been obtained in said step (1) is dried by heating, and a re-dried material (a) of the used water-absorbing resin is obtained; and
    a step (3) in which from the re-dried material (a) of the used water-absorbing resin having been obtained in said step (2), a re-dried material (b) of the used water-absorbing resin is obtained so as to be used as the recycled water-absorbing resin, by re-separating the constituent material other than the used water-absorbing resin in the used hygienic material.

5.  The method according to any one of claims 1 to 4, wherein the recycled water-absorbing resin has a water-soluble content of 15 weight% or less.

6.  The method according to any one of claims 1 to 5, wherein the recycled water-absorbing resin contains 80 weight% or more of particles ranging from 850 pm to 150 pm.

7.  The method according to any one of claims 1 to 6, wherein the recycled water-absorbing resin has a moisture content of 30 weight% or less.

8.  The method according to any one of claims 1 to 7, wherein the recycled water-absorbing resin has an initial color tone (YI value) of 35 or less.

9.  The method according to any one of claims 1 to 8, wherein an amount of residual urea in the recycled water-absorbing resin is 2 weight% or less.

10. The method according to any one of claims 1 to 9, wherein an amount of residual monomers in the recycled water-absorbing resin is 500 ppm or less.

11. The method according to any one of claims 1 to 10, wherein the recycled water-absorbing resin has a content of contraries of 5 $mm^2$/100 g or less.

12. The method according to any one of claims 1 to 11, wherein the recycled water-absorbing resin has a bulk density of 0.3 or more and 0.9 or less.

13. The method according to any one of claims 1 to 12, wherein the unused produced water-absorbing resin or the water-absorbing resin in which a monomer is a raw material has an AAC of 10 or more.

# INTERNATIONAL SEARCH REPORT

International application No.

**PCT/JP2023/003778**

## A. CLASSIFICATION OF SUBJECT MATTER

***C08L 101/14***(2006.01)i; ***A61F 13/53***(2006.01)i; ***B01J 20/26***(2006.01)i; ***B01J 20/30***(2006.01)i; ***B29B 17/02***(2006.01)i; ***C08J 3/20***(2006.01)i; ***C08J 11/06***(2006.01)i

FI: C08L101/14; B01J20/30; A61F13/53 300; B01J20/26 D ZAB; C08J11/06 CER; C08J3/20 Z CER; C08J3/20 CEZ; B29B17/02 ZAB

According to International Patent Classification (IPC) or to both national classification and IPC

## B. FIELDS SEARCHED

Minimum documentation searched (classification system followed by classification symbols)

C08K3/00 - 13/08, C08L1/00 - 101/14, A61F13/15 - 13/84, A61L15/16, A61L15/18, A61L15/20, A61L15/22, A61L15/22, A61L15/24, A61L15/26, A61L15/28, A61L15/30, A61L15/32, A61L15/32, A61L15/34, A61L15/36, A61L15/38, A61L15/40, A61L15/42, A61L15/42, A61L15/44, A61L15/46, A61L15/48, A61L15/50, A61L15/52, A61L15/54, A61L15/56, A61L15/58, A61L15/58, A61L15/60, A61L15/62, A61L15/64, B01J20/26, B01J20/00 - 20/28, B01J20/30 - 20/34, B29B17/00 - 17/04, C08J11/00 - 11/28, C08J3/00 - 3/28, C08J99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| Y | JP 2013-198862 A (HOKKAIDO UNIV., UNICHARM CORP.) 03 October 2013 (2013-10-03) <br> claims, paragraphs [0005], [0024], [0027]-[0028], examples | 1-13 |
| Y | WO 2021/044690 A1 (UNICHARM CORP.) 11 March 2021 (2021-03-11) <br> claims, paragraphs [0006]-[0008], [0093]-[0095], examples | 1-13 |
| Y | JP 2003-326161 A (NIPPON SHOKUBAI CO., LTD.) 18 November 2003 (2003-11-18) <br> claims, paragraphs [0005], [0028]-[0031], [0039], [0044], examples | 1-13 |
| A | JP 2021-000637 A (UNICHARM CORP.) 07 January 2021 (2021-01-07) <br> entire text | 1-13 |

☑ Further documents are listed in the continuation of Box C.  ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **18 April 2023** | **25 April 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**

| International application No. |
|---|
| **PCT/JP2023/003778** |

**C.    DOCUMENTS CONSIDERED TO BE RELEVANT**

| Category* | Citation of document, with indication, where appropriate, of the relevant passages | Relevant to claim No. |
|---|---|---|
| A | WO 2021/162082 A1 (NIPPON SHOKUBAI CO., LTD.) 19 August 2021 (2021-08-19)<br>entire text | 1-13 |
| A | WO 2012/140981 A1 (HYMO CORP.) 18 October 2012 (2012-10-18)<br>entire text | 1-13 |
| A | WO 2021/075506 A1 (SUMITOMO SEIKA CHEMICALS CO., LTD.) 22 April 2021 (2021-04-22)<br>entire text | 1-13 |
| A | JP 2020-195994 A (UNICHARM CORP.) 10 December 2020 (2020-12-10)<br>entire text | 1-13 |
| A | JP 2010-207811 A (KAO CORP.) 24 September 2010 (2010-09-24)<br>entire text | 1-13 |
| A | JP 2021-181507 A (SANYO CHEM. IND. LTD.) 25 November 2021 (2021-11-25)<br>entire text | 1-13 |
| A | US 2017/0216815 A1 (LG CHEM, LTD.) 03 August 2017 (2017-08-03)<br>whole document | 1-13 |

Form PCT/ISA/210 (second sheet) (January 2015)

## INTERNATIONAL SEARCH REPORT
### Information on patent family members

International application No.

**PCT/JP2023/003778**

| Patent document cited in search report | | | Publication date (day/month/year) | Patent family member(s) | | | Publication date (day/month/year) |
|---|---|---|---|---|---|---|---|
| JP | 2013-198862 | A | 03 October 2013 | US | 2015/0045461 | A1 | |
| | | | | claims, paragraphs [0003], [0046], [0051]-[0053], examples | | | |
| WO | 2021/044690 | A1 | 11 March 2021 | EP | 4001354 | A1 | |
| | | | | claims, paragraphs [0006]-[0008], [0104]-[0106], examples | | | |
| JP | 2003-326161 | A | 18 November 2003 | (Family: none) | | | |
| JP | 2021-000637 | A | 07 January 2021 | US | 2022/0072511 | A1 | |
| | | | | whole document | | | |
| | | | | EP | 3964286 | A1 | |
| | | | | whole document | | | |
| WO | 2021/162082 | A1 | 19 August 2021 | EP | 4104942 | A1 | |
| | | | | whole document | | | |
| WO | 2012/140981 | A1 | 18 October 2012 | (Family: none) | | | |
| WO | 2021/075506 | A1 | 22 April 2021 | EP | 4046706 | A1 | |
| | | | | whole document | | | |
| JP | 2020-195994 | A | 10 December 2020 | US | 2022/0072511 | A1 | |
| | | | | whole document | | | |
| | | | | EP | 3964286 | A1 | |
| | | | | whole document | | | |
| JP | 2010-207811 | A | 24 September 2010 | CN | 102014838 | A | |
| | | | | whole document | | | |
| JP | 2021-181507 | A | 25 November 2021 | WO | 2020/105277 | A1 | |
| | | | | whole document | | | |
| | | | | CN | 113166432 | A | |
| | | | | whole document | | | |
| US | 2017/0216815 | A1 | 03 August 2017 | WO | 2017/014400 | A1 | |
| | | | | whole document | | | |
| | | | | EP | 3165564 | A1 | |
| | | | | whole document | | | |

Form PCT/ISA/210 (patent family annex) (January 2015)

## REFERENCES CITED IN THE DESCRIPTION

**Patent documents cited in the description**

- JP 2000084533 A
- JP 2019178461 A
- JP 2006320900 A
- JP 2003135519 A
- WO 2021044690 A
- WO 2021162071 A
- WO 2021162082 A
- EP 3783055 A1
- US 20210053028 A1
- US 20210054161 A1
- US 20210054163 A1
- US 20210054164 A1
- JP 2021075819 A
- JP 6502454 W
- WO 2013141357 A
- JP 2003326161 A
- WO 2020213298 A
- WO 2022080342 A
- JP 2013198862 A
- JP 2019135046 A
- JP 5350361 B
- US 7638570 B
- JP 2000302876 A

- US 20080161512
- WO 2009123197 A
- US 20080194863
- US 20050215734
- US 6241928 B
- US 7265190 B
- US 4893999 A
- US 2005215734
- US 6987151 B
- US 6710141 B
- WO 2011126079 A
- WO 2006100300 A
- WO 2011025012 A
- WO 2011025013 A
- WO 2011111657 A
- US 7183456 B
- WO 92001008 A
- WO 92020723 A
- WO 2007074167 A
- WO 2009109563 A
- WO 2009153196 A
- WO 2010006937 A
- US 6228930 B

**Non-patent literature cited in the description**

- **CHIKYU KANKYO** ; **HAIRYOSHITA MONOZU-KURI**. Special topic 3: Manufacturing in Consideration of Global Environment. *CSR Activity Report*, 09 May 2016, vol. 3, 21-24
- Shiyozumi Kamiomutsu no Risaikuru ni Yoru Parupu Sairiyou no Kankyou Eikyou Hyouka and Omutsu Shigenka no Kankyo Hyouka (Environment Impact Assessment of Pulp Reuse by Recycling Used Paper Diapers and Environment Assessment of Recycling Paper Diapers. **SHIGEO IMAI et al.** Japanese domestic magazine. Kankyou Jyoka Gijyutsu (Environment Cleanup Technology, 01 July 2016, vol. 15, 85-89

- Green Converting, Kami-omutsu to Kami-omotu no Jyunkan Risaiukuru he and Onshitsu Kouka Gasu 3 Warigen no Shinsaishigennka Gijyutsu (Movement to Paper Diaper to Paper Diaper Circulation Recycling and New Recycling Technology for Reducing Greenhouse Effect Gas by 30%). **SACHIKO ADACHI et al.** Japanese domestic magazine. CONVERTECH, 15 February 2016, vol. 44, 50-52